# EUROPEAN PATENT APPLICATION

(11) **EP 4 845 076 A1**
(43) Date of publication of application: **25.11.2026**
(21) Application number: 24917800.5
(22) Date of filing: 19.01.2024
(51) Int. Cl.: H04L 5/00

(54) **COMMUNICATION METHOD, AND APPARATUS, DEVICE, CHIP AND STORAGE MEDIUM**

(71) Applicant: GUANGDONG OPPO MOBILE TELECOMMUNICATIONS CORP., LTD., Dongguan, Guangdong 523860 (CN)
(72) Inventor: CHEN, Wenhong, Dongguan, Guangdong 523860 (CN); LIU, Zhe, Dongguan, Guangdong 523860 (CN)
(74) Representative: Penza, Giancarlo
(86) International application number: PCT/CN2024/073347
(87) International publication number: WO 2025/152177

(57) **Abstract**

Provided in the disclosure are a communication method, and an apparatus, a device, a chip and a storage medium. The method comprises: receiving a first demodulation reference signal (DMRS) configuration and a second DMRS configuration, wherein the first DMRS configuration indicates a first DMRS resource that is not used for DMRS transmission and/or reception and is not used for data transmission and/or reception, and the second DMRS configuration indicates a second DMRS resource that is used for data transmission and/or reception and is not used for DMRS transmission and/or reception; and on the basis of the first DMRS configuration and the second DMRS configuration, performing DMRS transmission and/or reception, and/or performing data transmission and/or reception.

## Description

### TECHNICAL FIELD

The disclosure relates to the technical field of communications, and in particular to communication methods and apparatuses, devices, a chip and a storage medium.

### RELATED ART

In the related art, in case that time-frequency resources for data transmission and/or reception may also be used for demodulation reference signal (DMRS) transmission and/or reception, if a network device simultaneously schedules a plurality of users for multi-user multiplexing, there is a large interference in the DMRSs between the multiplexed users. For some users who do not support an advanced receiver, it is difficult to effectively cancel interference at a receiving end, which will lead to poor detection performance. Even for users who support the advanced receiver, if the interference on a pilot signal is too large, a probability of detection failure will be increased. Therefore, in case that a user, whose transmission and/or reception of the DMRS are superimposed with the transmission and/or reception of the data, is multiplexed with other users, how to ensure the detection performance of terminal devices having different reception capabilities is a problem that needs to be solved.

### SUMMARY

The disclosure provides communication methods and apparatuses, devices, a chip and a storage medium.

In a first aspect, there is provided a communication method in the disclosure, including the following operations.

A first DMRS configuration and a second DMRS configuration are received. The first DMRS configuration indicates a first DMRS resource that is not used for DMRS transmission and/or reception and is not used for data transmission and/or reception, and the second DMRS configuration indicates a second DMRS resource that is used for data transmission and/or reception but is not used for DMRS transmission and/or reception.

DMRS transmission and/or reception and/or data transmission and/or reception are performed based on the first DMRS configuration and the second DMRS configuration.

In a second aspect, there is provided a communication method in the disclosure, including the following operations.

A first DMRS configuration and a second DMRS configuration are transmitted to a first terminal device. The first DMRS configuration indicates a first DMRS resource that is not used for DMRS transmission and/or reception and is not used for data transmission and/or reception, and the second DMRS configuration indicates a second DMRS resource that is used for data transmission and/or reception but is not used for DMRS transmission and/or reception.

DMRS transmission and/or reception and/or data transmission and/or reception are performed with the first terminal device based on the first DMRS configuration and the second DMRS configuration.

In a third aspect, there is provided a terminal apparatus in the disclosure, including a first communication unit.

The first communication unit is configured to receive a first DMRS configuration and a second DMRS configuration. The first DMRS configuration indicates a first DMRS resource that is not used for DMRS transmission and/or reception and is not used for data transmission and/or reception, and the second DMRS configuration indicates a second DMRS resource that is used for data transmission and/or reception but is not used for DMRS transmission and/or reception.

The first communication unit is further configured to perform DMRS transmission and/or reception and/or perform data transmission and/or reception based on the first DMRS configuration and the second DMRS configuration.

In a fourth aspect, there is provided a network apparatus in the disclosure, including a second communication unit.

The second communication unit is configured to transmit a first DMRS configuration and a second DMRS configuration to a first terminal device. The first DMRS configuration indicates a first DMRS resource that is not used for DMRS transmission and/or reception and is not used for data transmission and/or reception, and the second DMRS configuration indicates a second DMRS resource that is used for data transmission and/or reception but is not used for DMRS transmission and/or reception.

The second communication unit is further configured to perform DMRS transmission and/or reception and/or perform data transmission and/or reception with the first terminal device based on the first DMRS configuration and the second DMRS configuration.

In a fifth aspect, there is provided a terminal device in the disclosure, including a memory, a processor, and a transceiver. The memory is configured to store a computer program. The processor is connected with the memory and is configured to call the computer program from the memory and execute the computer program to implement the method in the first aspect described above. The transceiver is configured to receive and transmit information in a process of transmitting and receiving information with other external devices.

In a sixth aspect, there is provided a network device in the disclosure, including a memory, a processor, and a transceiver. The memory is configured to store a computer program. The processor is connected with the memory and is configured to call the computer program from the memory and execute the computer program to implement the method in the second aspect described above. The transceiver is configured to receive and transmit information in a process of transmitting and receiving information with other external devices.

In a seventh aspect, there is provided a chip in the disclosure, including a memory, a processor, and a transceiver. The memory is configured to store a computer program. The processor is connected with the memory and is configured to call the computer program from the memory and execute the computer program to cause a device equipped with the chip to perform the method in the first aspect or the second aspect described above. The transceiver is configured to receive and transmit information in a process of transmitting and receiving information with a device or a chip.

In an eighth aspect, there is provided a computer-readable storage medium in the disclosure. The computer-readable storage medium has stored thereon a computer program that, when executed by at least one processor, causes at least one processor to implement the method in the first aspect or the second aspect described above.

In a ninth aspect, there is provided a computer program product in the disclosure. The computer program product includes a computer storage medium storing a computer program, the computer program includes instructions executable by at least one processor, and when the instructions are executed by the at least one processor, the method in the first aspect or the second aspect described above is implemented.

In a tenth aspect, there is provided a computer program in the disclosure. The computer program causes a computer to perform the method in the first aspect or the second aspect described above.

The disclosure provides the communication method in which a first terminal device may receive a first DMRS configuration and a second DMRS configuration. The first DMRS configuration indicates a first DMRS resource that is not used for DMRS transmission and/or reception and is not used for data transmission and/or reception, and the second DMRS configuration indicates a second DMRS resource that is used for data transmission and/or reception but is not used for DMRS transmission and/or reception. The DMRS transmission and/or reception and/or the data transmission and/or reception are performed based on the first DMRS configuration and the second DMRS configuration. As such, after the first terminal device receives the first DMRS configuration and the second DMRS configuration, based on the first DMRS configuration and the second DMRS configuration, it is possible to avoid mutual interference between respective DMRSs transmitted and/or received in superposition with data, and/or between the DMRS transmitted and/or received in superposition with data and a DMRS transmitted and/or received separately, thereby ensuring detection performance of the first terminal device and improving uplink and downlink transmission performance.

### BRIEF DESCRIPTION OF THE DRAWINGS

The accompanying drawings described herein are used to provide a further understanding of the disclosure and constitute a part of the disclosure. The schematic embodiments of the disclosure and the description thereof are intended to explain the disclosure and do not constitute an improper limitation of the disclosure.
FIG. 1 is a schematic diagram of a communication architecture.
FIG. 2A is a first schematic diagram of a scenario of a DMRS type.
FIG. 2B is a second schematic diagram of a scenario of a DMRS type.
FIG. 3A is a first schematic diagram of a scenario of another DMRS type.
FIG. 3B is a second schematic diagram of a scenario of another DMRS type.
FIG. 4 is a schematic diagram of a scenario in which a DMRS and data occupy time-frequency resources.
FIG. 5 is a schematic flowchart of a communication method provided by an embodiment of the disclosure.
FIG. 6A is a first schematic diagram of a scenario in which a DMRS and data occupy time-frequency resources, provided by an embodiment of the disclosure.
FIG. 6B is a second schematic diagram of a scenario in which a DMRS and data occupy time-frequency resources, provided by an embodiment of the disclosure.
FIG. 7A is a third schematic diagram of a scenario in which a DMRS and data occupy time-frequency resources, provided by an embodiment of the disclosure.
FIG. 7B is a fourth schematic diagram of a scenario in which a DMRS and data occupy time-frequency resources, provided by an embodiment of the disclosure.
FIG. 8A is a fifth schematic diagram of a scenario in which a DMRS and data occupy time-frequency resources, provided by an embodiment of the disclosure.
FIG. 8B is a sixth schematic diagram of a scenario in which a DMRS and data occupy time-frequency resources, provided by an embodiment of the disclosure.
FIG. 9 is a schematic diagram of a structure composition of a terminal apparatus 900 provided by an embodiment of the disclosure.
FIG. 10 is a schematic diagram of a structure composition of a network apparatus 1000 provided by an embodiment of the disclosure.
FIG. 11 is a schematic diagram of a structure composition of a communication device provided by an embodiment of the disclosure.
FIG. 12 is a schematic structural diagram of a chip provided by an embodiment of the disclosure.
FIG. 13 is a schematic block diagram of a communication system provided by an embodiment of the disclosure.

### DETAILED DESCRIPTION

Technical solutions in embodiments of the disclosure will be described below with reference to the accompanying drawings in the embodiments of the disclosure. It is obvious that the described embodiments are some of the embodiments of the disclosure, but not all of the embodiments. All other embodiments obtained by those of ordinary skill in the art based on the embodiments in the disclosure without paying creative efforts shall fall within the scope of protection of the disclosure.

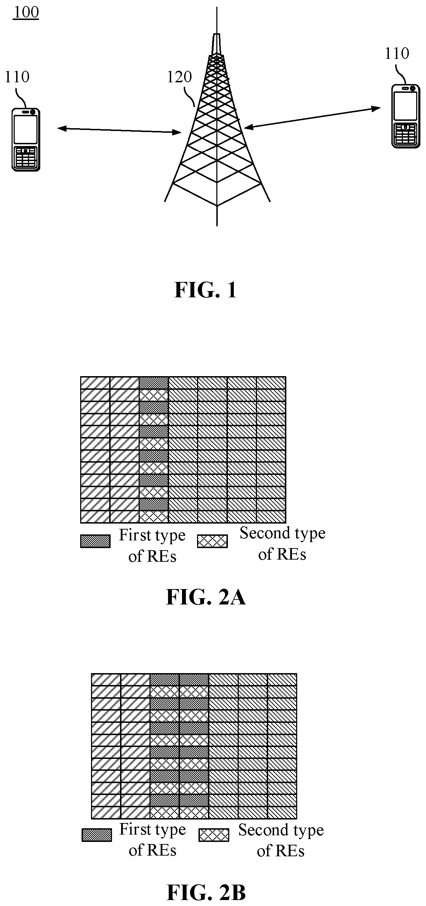

FIG. 1 is a schematic diagram of an application scenario for the embodiments of the disclosure.

As shown in FIG. 1, a communication system 100 may include a terminal device 110 and a network device 120. The network device 120 may communicate with the terminal device 110 through an air interface. Multi-service transmission and/or reception is supported between the terminal device 110 and the network device 120.

It will be appreciated that the embodiments of the disclosure are illustrated by way of example using the communication system 100, but the embodiments of the disclosure are not limited thereto. That is, the technical solution in the embodiments of the disclosure may be applied to various communication systems, such as a long term evolution (LTE) system, an LTE time division duplex (TDD) system, a universal mobile telecommunication system (UMTS), an internet of things (IoT) system, a narrow band internet of things (NB-IoT) system, an enhanced machinetype communication (eMTC) system, a 5G communication system (also known as a new radio (NR) communication system), or a future communication system, etc.

In the communication system 100 illustrated in FIG. 1, the network device 120 may be an access network device that communicates with the terminal device 110. The access network device may provide communication coverage for a particular geographic area and may communicate with the terminal device 110 located within the coverage area.

The network device 120 may be an evolutional node B (eNB or eNodeB) in an LTE system, a next generation radio access network (NG RAN) device, a base station (gNB) in an NR system, or a wireless controller in a cloud radio access network (CRAN). The network device 120 may also be a relay station, an access point, an in-vehicle device, a wearable device, a hub, a switch, a network bridge, a router, or a network device in a future evolved public land mobile network (PLMN), or the like.

The terminal device 110 may be any terminal device including, but not limited to, a terminal device that is connected to the network device 120 or other terminal devices via a wired or wireless connection.

For example, the terminal device 110 may refer to an access terminal, a user equipment (UE), a user unit, a user station, a mobile station, a mobile unit, a remote station, a remote terminal, a mobile device, a user terminal, a terminal, a wireless communication device, a user agent, or a user apparatus. The access terminal may be a cellular phone, a cordless phone, a session initiation protocol (SIP) phone, an IoT device, a satellite handheld terminal, a wireless local loop (WLL) station, a personal digital assistant (PDA), a handheld device with a wireless communication capability, a computing device or other processing devices connected to a wireless modem, an in-vehicle device, a wearable device, a terminal device in a 5G network, or a terminal device in a future evolved network, or the like.

The terminal device 110 may be used for device to device (D2D) communication.

FIG. 1 illustrates one network device and two terminal devices as an example. Optionally, the communication system 100 may include a plurality of network devices and another number of terminal devices may be included in the coverage area of each network device, which is not limited in the embodiments of the disclosure.

It should be noted that FIG. 1 merely illustrates a system to which the disclosure is applicable by way of example, and the methods illustrated in the embodiments of the disclosure may be applicable to other systems. Furthermore, the terms "system" and "network" are often used interchangeably herein.

It will be appreciated that the term "and/or" herein merely describes an association relationship between associated objects, indicating that three types of relationships may exist. For example, "A and/or B" may represent three scenarios: an independent existence of A, an existence of both A and B, or an independent existence of B. In addition, the character "/" herein generally indicates that the associated objects before and after are in an "or" relationship.

It should also be understood that the "indication" mentioned in the embodiments of the disclosure may be a direct indication, an indirect indication, or represent an association relationship. For example, A indicates B, which may mean that A directly indicates B, e.g., B may be obtained through A; it may also mean that A indirectly indicates B, e.g., A indicates C, and B may be obtained through C; it may also mean that there is an association relationship between A and B.

It should also be understood that the "correspondence" mentioned in the embodiments of the disclosure may mean that there is a direct correspondence or an indirect correspondence between two items, or may mean that there is a correlation between the two items, or may represent a relationship such as "indicating and being indicated", "configuring and being configured", or the like.

In order to facilitate understanding of the technical solutions in the embodiment of the disclosure, the technologies related to the embodiments of the disclosure will be described below. The following related technologies, as optional solutions, may be arbitrarily combined with the technical solutions in the embodiments of the disclosure, and all of the combinations belong to the scope of protection of the embodiments of the disclosure.

In the NR communication system, the DMRSs may be divided into a front-loaded DMRS and a post-loaded DMRS (which may be referred to as an additional DMRS).

It should be noted that the front-loaded DMRS is usually located at the first few orthogonal frequency division multiplexing (OFDM) symbols in a slot, and a pattern of the post-loaded DMRS is a repetition of the front-loaded DMRS (for example, using a same frequency domain resource, and for another example, using a same number of OFDM symbols). The front-loaded DMRS may comprise one or more OFDM symbols, as configured by the network device.

It should also be noted that NR may support two different DMRS types, and different DMRS types have different resource occupancy methods. Hereinafter, the two different DMRS types will be described with reference to FIGS. 2A to 3B, in which one small square representing one resource element (RE), 12 subcarriers in a frequency domain resource, and 7 OFDM symbols in a time domain resource is taken as an example.

For one DMRS type, as shown in FIGS. 2A and 2B, two code division multiplexing (CDM) groups may be supported on a single OFDM symbol per physical resource block (PRB), and each CDM group contains six subcarriers. The first CDM group is carried by the first type of REs and the second CDM group is carried by the second type of REs. Each CDM group may support two ports, and orthogonality between the two ports is maintained via an orthogonal cover code (OCC), that is, the OCC used by one port is [+1 +1 +1 +1 +1 +1], and the OCC used by the other port is [+1 -1 +1 -1 +1 -1], and the orthogonality between the two ports is ensured by the OCC.

Exemplarily, as shown in FIG. 2A, up to four orthogonal ports may be supported on a single OFDM symbol.

Exemplarily, as shown in FIG. 2B, up to eight orthogonal ports may be supported on two OFDM symbols, and a time domain orthogonal cover code (TD-OCC) may be employed between the two OFDM symbols.

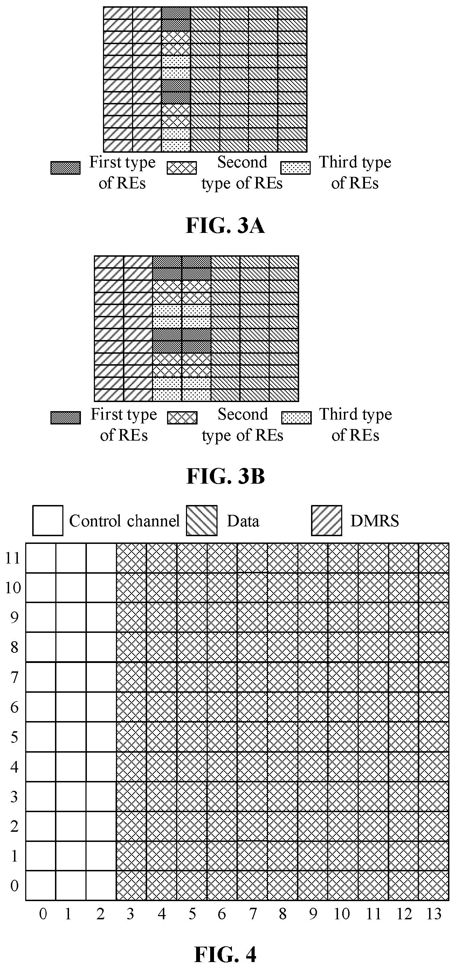

For another DMRS type, as shown in FIGS. 3A and 3B, three CDM groups may be supported on a single OFDM symbol per PRB, and each CDM group contains four subcarriers arranged as two adjacent pairs. The first CDM group is carried by the first type of REs, the second CDM group is carried by the second type of REs, and the third CDM group is carried by the third type of REs. Each CDM group may support two ports, and orthogonality between the two ports is maintained via the OCC, that is, the OCC used by one port is [+1 +1 +1 +1], and the OCC used by the other port is [+1 -1 +1 -1].

Exemplarily, as shown in FIG. 3A, up to six orthogonal ports may be supported on a single OFDM symbol.

Exemplarily, as shown in FIG. 3B, up to 12 orthogonal ports may be supported on two OFDM symbols, and the TD-OCC is employed between the two OFDM symbols.

In order to further reduce an overhead of physical resources (time-frequency resources) used for DMRS transmission and/or reception and increase a rate of DMRS transmission and/or reception, it is possible to consider superimposing transmission and/or reception of the DMRS and data. FIG. 4 is a schematic diagram of a scenario in which DMRS and data occupy time-frequency resources. As shown in FIG. 4, a control channel may be used to transmit and/or receive control information (such as data type and data size) about the DMRS and data to ensure the accuracy of DMRS transmission and/or reception and data transmission and/or reception. The DMRS and the data may occupy the same time-frequency resources (including subcarriers 0-11 on OFDM symbols 3-13), and may be transmitted and/or received in a superimposed manner using a certain transmission power ratio (that is, the DMRS and the data are superimposed on the same RE), so that the data may be directly detected at the receiving end using an AI receiver without a separate channel estimation process. In FIG. 4, all REs for transmitting and/or receiving the data may be used to transmit and/or receive the DMRS simultaneously, so that special time-frequency resources are not required to transmit and/or receive the DMRS, and the overhead of the time-frequency resources is significantly reduced.

In the embodiments of the disclosure, terms such as RE, PRB, a legacy user, and a user with superimposed transmission and/or reception are mentioned many times, and the RE, the PRB, the legacy user, and the user with superimposed transmission and/or reception will be briefly described below.

RE: a smallest time-frequency resource element in a wireless communication system. For example, in an NR or LTE system, one RE corresponds to one subcarrier in the frequency domain, and one RE corresponds to one OFDM symbol in the time domain.

PRB: the PRB may correspond to K consecutive subcarriers in the frequency domain, and M consecutive OFDM symbols in the time domain, where K, M are positive integers.

For example, the value of K may be one or more of 8, 12, and 16, or may be another value, and the embodiment of the disclosure is not limited thereto.

For example, the value of M may be one or more of 6, 7, 13, and 14, or may be another value, and the embodiment of the disclosure is not limited thereto.

Legacy user: it may refer to a user whose DMRS and data need to be transmitted and/or received separately. That is, for the legacy user, the DMRS and the data need to occupy different time-frequency resources for transmission and/or reception.

User with superimposed transmission and/or reception: it may refer to a user whose DMRS and data may be transmitted and/or received in a superimposed manner. That is, the DMRS and the data may occupy the same time-frequency resource (RE) for transmission and/or reception for the user with superimposed transmission and/or reception.

It should be noted that, in the embodiments of the disclosure, the multiplexed users may include a legacy user and a user with superimposed transmission and/or reception.

In the related art, when time-frequency resources for data transmission and/or reception may be simultaneously used for DMRS transmission and/or reception, if a network device schedules a plurality of users simultaneously for multi-user multiple-input multiple-output (MU-MIMO), there is a large interference among these users during DMRS transmission and/or reception. For some users who do not support an advanced receiver, it is difficult to effectively cancel interference at the receiving end, which will lead to poor detection performance. Even for users who support the advanced receiver, if the interference on the pilot signal is too large, the probability of detection failure will be increased. Therefore, when a user, whose DMRS and data are transmitted and/or received in a superimposed manner, is multiplexed with other users, how to ensure the detection performance of terminal devices having different reception capabilities is a problem that needs to be solved.

Based on this, an embodiment of the disclosure provides a communication method. A first terminal device receives a first DMRS configuration and a second DMRS configuration. The first DMRS configuration indicates a first DMRS resource that is not used for DMRS transmission and/or reception and is not used for data transmission and/or reception, and the second DMRS configuration indicates a second DMRS resource that is used for data transmission and/or reception but is not used for DMRS transmission and/or reception. DMRS transmission and/or reception and/or data transmission and/or reception are performed based on the first DMRS configuration and the second DMRS configuration. As such, after the first terminal device receives the first DMRS configuration and the second DMRS configuration, based on the first DMRS configuration and the second DMRS configuration, it is possible to avoid mutual interference between respective DMRSs transmitted and/or received in superposition with data, and/or between the DMRS transmitted and/or received in superposition with data and a DMRS transmitted and/or received separately, thereby ensuring the detection performance of the first terminal device and improving uplink and downlink transmission performance.

In order to facilitate understanding of the technical solutions in the embodiments of the disclosure, the technical solutions of the disclosure are described in detail below through specific embodiments. The above related technologies, as optional solutions, may be arbitrarily combined with the technical solutions in the embodiments of the disclosure, and all of the combinations belong to the scope of protection of the embodiments of the disclosure. The embodiments of the disclosure include at least some of the following content.

It should be noted that in the following embodiments, the transmission and/or reception of the DMRS and data in a superimposed manner are mentioned many times, and it will be appreciated that the transmission and/or reception of the DMRS and data in a superimposed manner means that the DMRS and the data may occupy the same physical resources (the time-frequency resource) and may be transmitted and/or received at a certain transmission power ratio. That is, the DMRS and the data may be transmitted and/or received on the same time-frequency resource at a certain transmission power ratio. The physical resources refer to the time domain and frequency domain resources for wireless signal transmission and/or reception. The time domain resource is usually in units of slots or symbols, while the frequency domain resource is in units of resource blocks or subcarrier spacings. Typically, each slot contains 14 symbols and each resource block contains 12 subcarriers. A RE occupies one symbol in the time domain and one subcarrier in the frequency domain.

For example, a RE is used as an example, it is assumed that a ratio of a transmission power of the DMRS on the RE to a transmission power of the data on the RE is a first transmission power ratio, then the DMRS and the data may be transmitted and/or received on the RE at the first transmission power ratio.

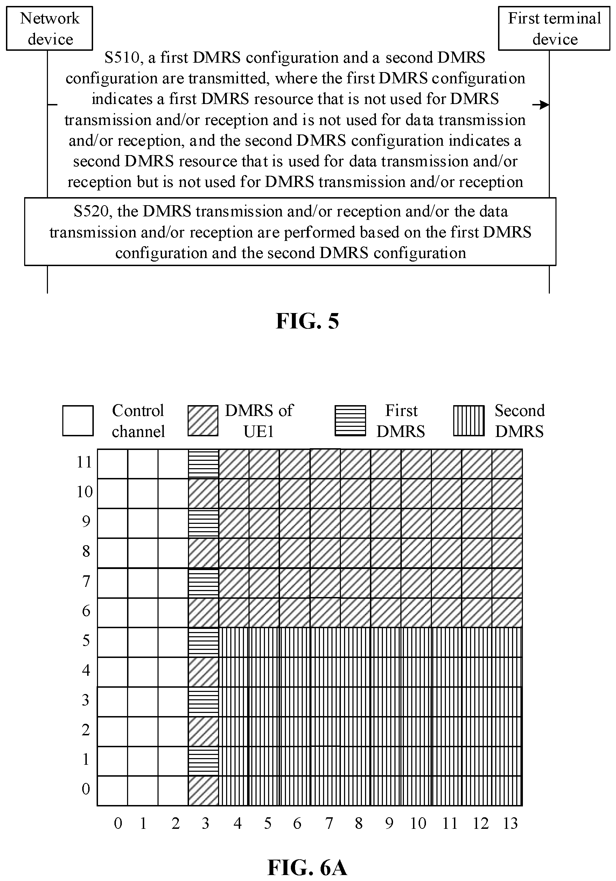

FIG. 5 is a schematic flowchart of a communication method provided by an embodiment of the disclosure. As shown in FIG. 5, the method includes the following operations.

At S510, a network device transmits a first DMRS configuration and a second DMRS configuration to a first terminal device. The first DMRS configuration indicates a first DMRS resource that is not used for DMRS transmission and/or reception and is not used for data transmission and/or reception, and the second DMRS configuration indicates a second DMRS resource that is used for data transmission and/or reception but is not used for DMRS transmission and/or reception.

Accordingly, the first terminal device receives the first DMRS configuration and the second DMRS configuration transmitted by the network device.

It should be noted that, the DMRS resource (such as the first DMRS resource and the second DMRS resource) may refer to a time-frequency resource occupied by a DMRS (such as a DMRS port), that is, from a perspective of the network device, the DMRS resource is a time-frequency resource capable of transmitting and/or receiving the DMRS.

It will be appreciated that the DMRS resource is a time-frequency resource capable of transmitting and/or receiving the DMRS, which may mean that, from the perspective of the network device, the DMRS resource may be a time-frequency resource used by the first terminal device for DMRS transmission and/or reception, or may be a time-frequency resource used by another terminal device (other than the first terminal device) for DMRS transmission and/or reception, which is not limited in the embodiment of the disclosure. Further, if the DMRS resources are not used for DMRS transmission and/or reception by the first terminal device, these DMRS resources are reserved DMRS resources from the perspective of the first terminal device, rather than the time-frequency resources for DMRS transmission and/or reception.

Exemplarily, the first DMRS resource is not used for the DMRS transmission and/or reception by the first terminal device, but may be used for DMRS transmission and/or reception by another terminal device (such as a second terminal device) other than the first terminal device.

Exemplarily, the second DMRS resource is not used for the DMRS transmission and/or reception by the first terminal device, but may be used for DMRS transmission and/or reception by another terminal device (such as a third terminal device) other than the first terminal device.

Further, the DMRS resource may be configured by configuration information related to the DMRS, such as a DMRS port or a DMRS type.

It will be appreciated that, the first DMRS resource may be a DMRS resource (port) in an NR protocol, for example, a DMRS resource having a DMRS type of Type 1 or a DMRS resource having a DMRS type of Type 2 in the NR protocol.

In some embodiments, the network device may perform DMRS transmission and/or reception with the second terminal device on the first DMRS resource. At least part of time-frequency resources used by the second terminal device for data transmission and/or reception overlap with at least part of time-frequency resources used by the first terminal device for data transmission and/or reception.

It should be noted that at least part of the time-frequency resources may be one or multiple time-frequency resources (not all of the time-frequency resources) among the two sets of time-frequency resources (that is, the time-frequency resources used by the second terminal device for the data transmission and/or reception, and the time-frequency resources used by the first terminal device for the data transmission and/or reception), or may be all of the time-frequency resources among the two sets of time-frequency resources, which is not limited in the embodiment of the disclosure.

It should also be noted that, since the first terminal device does not perform the DMRS transmission and/or reception and does not perform the data transmission and/or reception on the first DMRS resource, interference with the DMRS transmission and/or reception of the first terminal device can be avoided when another terminal device (such as the second terminal device) performs the DMRS transmission and/or reception on the first DMRS resource. That is, the first terminal device may reserve the first DMRS resource for another terminal device to perform the DMRS transmission and/or reception. Another terminal device may be a terminal device capable of transmitting and/or receiving the DMRS and the data in a superimposed manner, or may be a terminal device capable of transmitting and/or receiving the DMRS alone.

It should be noted that, another terminal device capable of transmitting and/or receiving the DMRS and the data in a superimposed manner, means that for another terminal device, the DMRS and the data may occupy the first DMRS resource and may be transmitted and/or received at a certain power ratio. That is, for another terminal device, the DMRS and the data may be transmitted and/or received on the first DMRS resource at a certain power ratio.

Further, the first terminal device may perform rate matching on the data on the first DMRS resource.

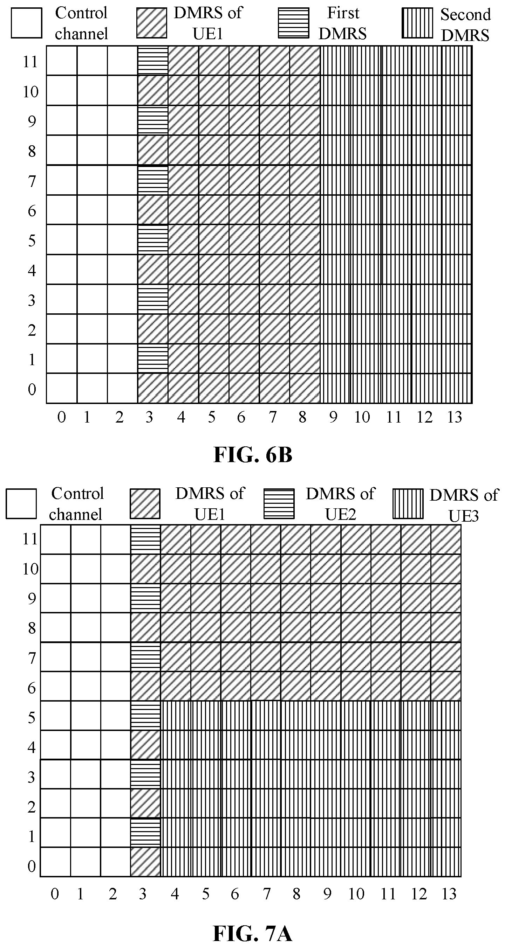

Exemplarily, as shown in FIGS. 6A and 6B, UE 1 (that is, the first terminal device) may not transmit and/or receive the DMRS and not transmit and/or receive the data on a time-frequency resource occupied by the first DMRS (that is, the first DMRS resource). Further, the network device may transmit and/or receive the DMRS with UE 2 (that is, the second terminal device) on the time-frequency resource occupied by the first DMRS.

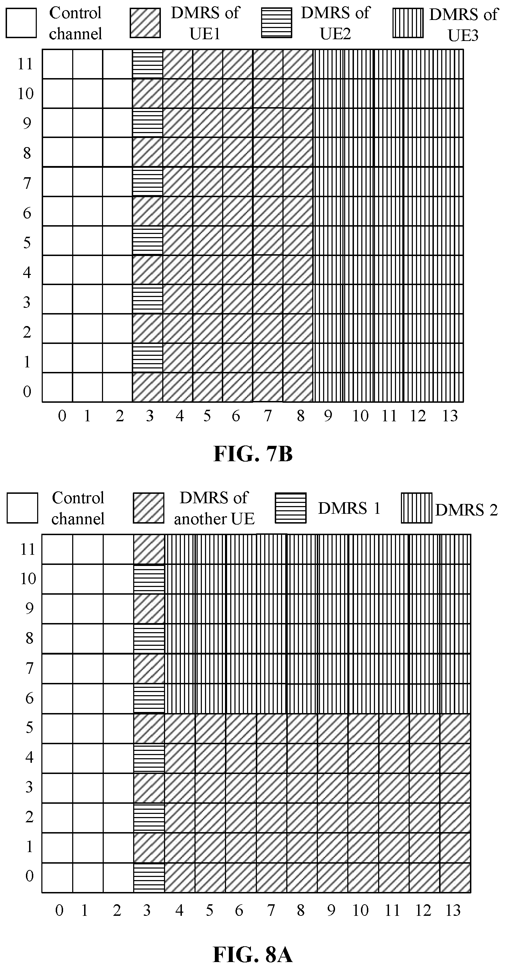

Exemplarily, as shown in FIGS. 7A and 7B, the first DMRS resource may be used for DMRS transmission and/or reception by the UE 2 (i.e., the second terminal device).

According to the method, the network device may perform DMRS transmission and/or reception with the second terminal device on the first DMRS resource, while the first terminal device does not perform signal transmission and/or reception (including DMRS transmission and/or reception and data transmission and/or reception) on the first DMRS resource, thereby avoiding the interference caused by the DMRS transmission and/or reception of the first terminal device to the DMRS transmission and/or reception of the second terminal device, ensuring the detection performance of the first terminal device and improving the uplink and downlink transmission performance.

In some embodiments, the first DMRS resource may occupy a portion of subcarriers on one or more OFDM symbols.

It should be noted that the portion of the subcarriers on one or more OFDM symbols may be one subcarrier on one or more OFDM symbols, or may be multiple subcarriers (not all of the subcarriers) on one or more OFDM symbols, which is not limited in the embodiment of the disclosure.

Exemplarily, the first DMRS resource may occupy a portion of subcarriers on one or more OFDM symbols of a physical downlink shared channel (PDSCH)/physical uplink shared channel (PUSCH).

Exemplarily, the first terminal device does not perform the DMRS transmission and/or reception and does not perform the data transmission and/or reception on the first DMRS resource, and the first DMRS resource may occupy odd-numbered subcarriers or even-numbered subcarriers on one or more OFDM symbols. For example, as shown in FIGS. 6A and 6B, the first DMRS resource may occupy odd-numbered subcarriers on the OFDM symbol 3. As another example, as shown in FIGS. 7A and 7B, the first DMRS resource is a time-frequency resource occupied by the DMRS of the UE 2 (that is, the second terminal device), and the first DMRS resource may occupy odd-numbered subcarrier on the OFDM symbol 3.

According to the method, the first DMRS resource may occupy a portion of the subcarriers on one or more OFDM symbols, and the first terminal device may not transmit and/or receive the DMRS and not transmit and/or receive the data on the portion of the subcarriers, thereby avoiding mutual interference between another terminal device (such as the second terminal device) and the first terminal device when transmitting and/or receiving the DMRS on the portion of the subcarriers, ensuring the detection performance of the first terminal device and improving the uplink and downlink transmission performance.

In some embodiments, the first terminal device performs power boosting for the DMRS transmission and/or performs power boosting for the data transmission on one or more OFDM symbols.

That is, when the first terminal device performs the DMRS transmission and/or the data transmission, transmission power boosting may be performed on one or more OFDM symbols.

Exemplarily, as shown in FIGS. 6A and 6B, if the UE 1 (that is, the first terminal device) does not perform the DMRS transmission and the data transmission on the odd-numbered subcarriers on the OFDM symbol 3, the UE 1 may perform the power boosting for the DMRS transmission and/or perform the power boosting for the data transmission on the even-numbered subcarriers on the OFDM symbol 3. For example, if the UE 1 does not perform the DMRS transmission and does not perform the data transmission on the odd-numbered subcarriers on the OFDM symbol 3, the DMRS transmitted by the UE 1 on the even-numbered subcarriers on the OFDM symbol 3 may obtain a power boosting of 3 dB.

Exemplarily, as shown in FIGS. 7A and 7B, if the UE 1 (that is, the first terminal device) does not perform the DMRS transmission and does not perform the data transmission on the odd-numbered subcarriers on the OFDM symbol 3 (that is, the subcarriers occupied by the DMRS of the UE 2), the UE 1 may perform the power boosting for the DMRS transmission and/or perform the power boosting for the data transmission on the even-numbered subcarriers on the OFDM symbol 3.

It should be noted that a ratio of the transmission power boosting by the first terminal device on one or more OFDM symbols is: a ratio of the total number of the portion of subcarriers and subcarriers used for transmission on one or more OFDM symbols to the number of the subcarriers used for transmission. The subcarrier used for transmission is a subcarrier on which the first terminal device performs the DMRS transmission and/or the data transmission on one or more OFDM symbols. When the number of the portion of subcarriers on one or more OFDM symbols is recorded as *A*, the number of subcarriers used for transmission is recorded as *B*, and the ratio of the transmission power boosting is recorded as *C*, the calculation formula for the ratio *C* of the transmission power boosting may be as follows: $C = \left(A+B\right) / B$ (1).

It will be appreciated that the portion of subcarriers on the one or more OFDM symbols are subcarriers on which the first terminal device does not perform the DMRS transmission and does not perform the data transmission. For example, as shown in FIGS. 6A and 6B, taking the OFDM symbol 3 as an example, the portion of subcarriers on the OFDM symbol 3 may be the odd-numbered subcarriers on the OFDM symbol 3, and the first terminal device does not perform the DMRS transmission and does not perform the data transmission on the odd-numbered subcarriers on the OFDM symbol 3.

It will also be appreciated that the subcarriers used for transmission are subcarriers other than the portion of subcarriers on the one or more OFDM symbols. For example, as shown in FIGS. 6A and 6B, taking the OFDM symbol 3 as an example, when the first terminal device does not perform the DMRS transmission and does not perform the data transmission on the odd-numbered subcarriers on the OFDM symbol 3, the subcarriers used for transmission are the even-numbered subcarriers on the OFDM symbol 3.

It will also be appreciated that on the one or more OFDM symbols, the portion of subcarriers are subcarriers not used for the DMRS transmission and the data transmission, and the subcarriers used for transmission are subcarriers other than the portion of subcarriers. Therefore, *A* + *B* in Equation (1) is the total number of subcarriers on the one or more OFDM symbols. The first terminal device may allocate the transmission power of the portion of subcarriers to the power of the other subcarriers for transmission, thereby boosting the transmission power of the other subcarriers.

Exemplarily, as shown in FIGS. 6A and 6B, taking the OFDM symbol 3 as an example, the total number of subcarriers is 12, the subcarriers 1, 3, 5, 7, 9, and 11 are not used for the DMRS transmission and are not used for the data transmission, and the subcarriers used for transmission are the subcarriers 0, 2, 4, 6, 8, and 10. Then, the first terminal device may allocate the transmission power of the subcarriers 1, 3, 5, 7, 9, and 11 to the transmission power of the subcarriers 0, 2, 4, 6, 8, and 10, so that the ratio *C* of the transmission power boosting may be obtained as (6+6) /6=2.

According to the method, since the first terminal device does not perform the DMRS transmission and does not perform the data transmission on the portion of subcarriers on one or more OFDM symbols, the saved power can be used for the DMRS transmission and/or the data transmission on these OFDM symbols, and thus the first terminal device can obtain power gain when performing the DMRS transmission and/or the data transmission on these OFDM symbols, thereby improving the performance of uplink channel estimation.

In some embodiments, a received power for DMRS reception and/or data reception by the first terminal device remains unchanged on one or more OFDM symbols.

That is, on the one or more OFDM symbols, the received power of the subcarriers used for reception is the same as that of the subcarriers not used for reception for the first terminal device, and the first terminal device cannot obtain a power boosting in the received power when performing the DMRS reception and/or the downlink data reception.

In some embodiments, the first DMRS resource may be used for interference measurement from a terminal device other than the first terminal device.

It should be noted that since the first DMRS resource is actually used for another terminal device to transmit and/or receive the DMRS, the first terminal device may perform interference measurement on the first DMRS resource to obtain interference from another terminal device to the first terminal device itself, and perform interference suppression by the receiver.

It should also be noted that, when the first terminal device performs the interference measurement on the first DMRS resource, it may be assumed that only the DMRS transmission and/or reception of the interfering user is present on the first DMRS resource, and the data transmission and/or reception of the interfering user is not present on the first DMRS resource.

Exemplarily, as shown in FIGS. 7A and 7B, the first DMRS resource is a time-frequency resource occupied by the DMRS of the UE 2 (i.e., the second terminal device), and the first DMRS resource is actually used for the DMRS transmission and/or reception by the UE 2. Thus, the UE 1 (i.e., the first terminal device) may measure interference from the UE 2 on the first DMRS resource.

According to the method, the first DMRS resource may be used for interference measurement from another terminal device other than the first terminal device, and the first terminal device may perform the interference measurement on the first DMRS resource, thereby obtaining the interference from another terminal device to the first terminal device itself.

In some embodiments, the network device may perform DMRS transmission and/or reception with the third terminal device on the second DMRS resource. At least part of time-frequency resources used by the third terminal device for data transmission and/or reception overlap with at least part of the time-frequency resources used by the first terminal device for the data transmission and/or reception.

It should be noted that at least part of the time-frequency resources may be one or multiple time-frequency resources (not all of the time-frequency resources) among the two sets of time-frequency resources (that is, the time-frequency resources used by the third terminal device for the data transmission and/or reception, and the time-frequency resources used by the first terminal device for the data transmission and/or reception), or may be all of the time-frequency resources among the two sets of time-frequency resources, which is not limited in the embodiment of the disclosure.

It should also be noted that, since the first terminal device performs the data transmission and/or reception on the second DMRS resource and does not perform the DMRS transmission and/or reception, interference with DMRS transmission and/or reception of the first terminal device can be avoided when another terminal device (such as the third terminal device) performs the DMRS transmission and/or reception on the second DMRS resource. Another terminal device may be a terminal device capable of transmitting and/or receiving the DMRS and the data in a superimposed manner.

It should also be noted that, another terminal device capable of transmitting and/or receiving the DMRS and the data in a superimposed manner, means that for another terminal device, the DMRS and the data may occupy the second DMRS resource and may be transmitted and/or received at a certain transmission power ratio. That is, for another terminal device, the DMRS and the data may be transmitted and/or received on the second DMRS resource at a certain transmission power ratio.

Exemplarily, as shown in FIGS. 6A and 6B, the UE 1 (that is, the first terminal device) may transmit and/or receive the data and may not transmit and/or receive the DMRS on a time-frequency resource occupied by the second DMRS (that is, the second DMRS resource). Further, the network device may transmit and/or receive the DMRS with the UE 3 (that is, the third terminal device) on the time-frequency resource occupied by the second DMRS.

Exemplarily, as shown in FIGS. 7A and 7B, the second DMRS resource may be used for the DMRS transmission and/or reception by the UE 3 (i.e., the third terminal device).

According to the method, the network device may perform the DMRS transmission and/or reception with the third terminal device on the second DMRS resource, while the first terminal device does not perform the DMRS transmission and/or reception on the second DMRS resource, thereby avoiding the interference caused by the DMRS transmission and/or reception of the first terminal device to the DMRS transmission and/or reception of the third terminal device, ensuring the detection performance of the first terminal device, and improving the uplink and downlink transmission and/or reception performance.

In some embodiments, the second DMRS resource occupies all subcarriers on a portion of OFDM symbols used for data transmission and/or reception; or the second DMRS resource occupies a portion of subcarriers on all OFDM symbols used for data transmission and/or reception.

It is to be noted that the portion of subcarriers on all OFDM symbols used for data transmission and/or reception may be one subcarrier on all OFDM symbols used for data transmission and/or reception, or may be multiple subcarriers (not all of the subcarriers) on all OFDM symbols used for data transmission and/or reception, which is not limited in the embodiment of the disclosure.

Exemplarily, as shown in FIG. 6A, the first terminal device performs the data transmission and/or reception and does not perform the DMRS transmission and/or reception on the second DMRS resource, and the second DMRS resource occupies half of the subcarriers 0-5 on all of the OFDM symbols 4-13 used for data transmission and/or reception.

Exemplarily, as shown in FIG. 6B, the first terminal device performs the data transmission and/or reception and does not perform the DMRS transmission and/or reception on the second DMRS resource, and the second DMRS resource occupies all subcarriers on the OFDM symbols 9-13, which are half of the OFDM symbols 4-13 used for data transmission and/or reception.

Exemplarily, as shown in FIG. 7A, the first terminal device performs the data transmission and/or reception and does not perform the DMRS transmission and/or reception on the second DMRS resource, the second DMRS resource is a time-frequency resource occupied by the DMRS of the UE 3 (that is, the third terminal device), and the second DMRS resource may occupy half of the subcarriers 0-5 on all OFDM symbols 4-13 used for data transmission and/or reception.

Exemplarily, as shown in FIG. 7B, the first terminal device performs the data transmission and/or reception and does not perform the DMRS transmission and/or reception on the second DMRS resource, the second DMRS resource is a time-frequency resource occupied by the DMRS of the UE 3 (that is, the third terminal device), and the second DMRS resource occupies all subcarriers on the OFDM symbols 9-13, which are half of the OFDM symbols 4-13 used for data transmission and/or reception.

According to the method, the first terminal device may not transmit and/or receive the DMRS on the second DMRS resource, mutual interference with the DMRS transmission and/or reception of the first terminal device can be avoided when another terminal device (such as the third terminal device) performs the DMRS transmission and/or reception on the second DMRS resource, thereby ensuring the detection performance of the first terminal device and improving the uplink and downlink transmission and/or reception performance.

In some embodiments, the first terminal device performs power boosting for DMRS transmission and/or performs power boosting for data transmission on all OFDM symbols used for data transmission.

That is, in case that the second DMRS resource occupies a portion of subcarrier on all OFDM symbols used for data transmission and the first terminal device performs the DMRS transmission and/or the data transmission, the first terminal device may perform the transmission power boosting on all OFDM symbols used for data transmission.

Exemplarily, as shown in FIG. 6A, if the UE 1 (that is, the first terminal device) does not perform the DMRS transmission on one half of the subcarriers occupied by the second DMRS (that is, the subcarriers 0-5 on the symbols 4-13), the UE 1 may perform the power boosting for the DMRS transmission and/or perform the power boosting for the data transmission on the other half of the subcarriers (that is, the subcarriers 6-11 on the symbols 4-13). For example, if the UE 1 does not perform the DMRS transmission on one half of the subcarriers occupied by the second DMRS, the DMRS transmitted by the UE 1 on the other half of the subcarriers may obtain a power boosting of 3 dB.

Exemplarily, as shown in FIG. 7A, if the UE 1 (that is, the first terminal device) does not perform the DMRS transmission on one half of the subcarriers occupied by the second DMRS, that is, the subcarriers occupied by the DMRS of the UE 3 (that is, the subcarriers 0-5 on the symbols 4-13), the UE 1 may perform the power boosting for the DMRS transmission and/or perform the power boosting for the data transmission on the other half of the subcarriers (that is, the subcarriers 6-11 on the symbols 4-13).

Exemplarily, as shown in FIG. 7A, if the UE 1 does not perform the DMRS transmission on the subcarriers occupied by the DMRS of the UE 2 and the DMRS of the UE 3 within a data transmission bandwidth of the terminal device, the UE 1 can obtain the transmission power boosting when performing the DMRS transmission and/or the data transmission.

It should be noted that a ratio of the transmission power boosting by the first terminal device on all OFDM symbols used for data transmission is: a ratio of the total number of the portion of subcarriers and subcarriers used for transmission on all OFDM symbols used for data transmission to the number of the subcarriers used for transmission. The subcarrier used for transmission is a subcarrier on which the first terminal device performs the DMRS transmission and/or the data transmission on all OFDM symbols for data transmission.

It will be appreciated that the portion of subcarriers on all OFDM symbols used for data transmission are subcarriers on which the first terminal device does not perform the DMRS transmission. For example, as shown in FIG. 6A, all OFDM symbols used for data transmission are the OFDM symbols 4-13, the portion of subcarriers on the OFDM symbols 4-13 may be the subcarriers 0-5 on the OFDM symbols 4-13, and the first terminal device may not perform the DMRS transmission on the subcarriers 0-5 on the OFDM symbols 4-13.

It should also be appreciated that the subcarriers used for transmission are subcarriers other than the portion of subcarriers on all OFDM symbols used for data transmission. For example, as shown in FIG. 6A, if the first terminal device does not perform the DMRS transmission on the subcarriers 0-5 on the OFDM symbols 4-13, the subcarriers used for transmission are the subcarriers 6-11 on the OFDM symbols 4-13.

It should also be appreciated that on all OFDM symbols used for data transmission, the portion of subcarriers are subcarriers not used for the DMRS transmission, and the subcarriers used for the DMRS transmission are subcarriers other than the portion of subcarriers. The first terminal device may allocate the transmission power of the portion of subcarriers to the power of the other subcarriers used for the DMRS transmission, thereby boosting the transmission power of the other subcarriers.

Exemplarily, as shown in FIG. 6A, if the first terminal device does not perform the DMRS transmission on the subcarriers 0-5 on the OFDM symbols 4-13 and performs the DMRS transmission on the subcarriers 6-11 on the OFDM symbols 4-13, the first terminal device may allocate the transmission power of the subcarriers 0-5 to the transmission power of the subcarriers 6-11, so that the transmission power of the subcarriers 6-11 can be boosted.

According to the method, since the first terminal device does not perform the DMRS transmission on the portion of subcarriers on all OFDM symbols used for data transmission, the saved power may be used for the uplink DMRS transmission and/or the uplink data transmission on these OFDM symbols, and thus the first terminal device can obtain power gain when performing the DMRS transmission and/or the data transmission on these OFDM symbols, thereby improving the performance of uplink channel estimation.

In some embodiments, a received power for downlink DMRS reception and/or downlink data reception by the first terminal device remains unchanged on all OFDM symbols used for data reception.

That is, the received power of the subcarriers used for the downlink reception is the same as that of the subcarriers not used for the downlink reception on all OFDM symbols used for data reception, and the first terminal device cannot obtain a boosting in the received power when performing the downlink DMRS reception and/or the downlink data reception.

In some embodiments, the first DMRS configuration and the second DMRS configuration indicate the first DMRS resource and the second DMRS resource, respectively, through different DMRS ports, and/or indicate the first DMRS resource and the second DMRS resource, respectively, through different DMRS types.

Exemplarily, the first terminal device and the network device may pre-define a set of DMRS ports for the first DMRS resource and another set of DMRS ports for the second DMRS resource, and the network device may indicate the first DMRS resource and the second DMRS resource by indicating the respective DMRS ports.

Exemplarily, the first terminal device and the network device may pre-define a DMRS type (e.g., DMRS Type 1 or DMRS Type 2) for the first DMRS resource and another DMRS type (e.g., DMRS Type 3) for the second DMRS resource, and the network device may indicate the first DMRS resource and the second DMRS resource by indicating the respective DMRS types.

At S520, the network device performs the DMRS transmission and/or reception and/or performs the data transmission and/or reception with the first terminal device based on the first DMRS configuration and the second DMRS configuration.

It should be noted that, the first terminal device may, based on the first DMRS configuration, perform neither DMRS transmission and/or reception nor data transmission and/or reception on the first DMRS resource indicated by the first DMRS configuration, that is, perform rate matching on the data. The first terminal device may, based on the second DMRS configuration, perform no DMRS transmission and/or reception but still perform data transmission and/or reception on the second DMRS resource indicated by the second DMRS configuration.

That is, in the embodiment of the disclosure, both the first DMRS resource and the second DMRS resource are used for the DMRS transmission and/or reception by a terminal device other than the first terminal device, and at least part of time-frequency resources used by another terminal device for data transmission and/or reception overlap with at least part of the time-frequency resources used by the first terminal device for the data transmission and/or reception.

It should be noted that at least part of the time-frequency resources may be one or multiple time-frequency resources (not all of the time-frequency resources) among the two sets of time-frequency resources (that is, the time-frequency resources used by another terminal device for the data transmission and/or reception, and the time-frequency resources used by the first terminal device for the data transmission and/or reception), or may be all of the time-frequency resources among the two sets of time-frequency resources, which is not limited in the embodiment of the disclosure.

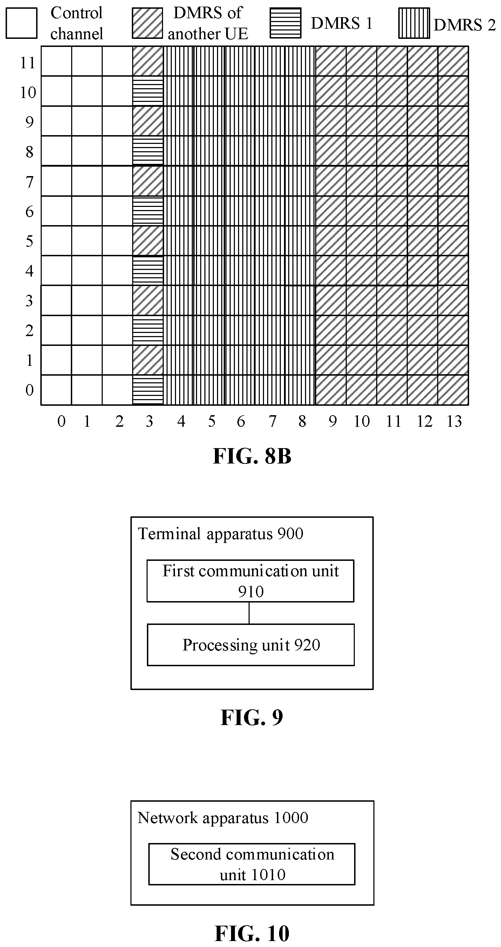

Exemplarily, as shown in FIGS. 8A and 8B, on the time-frequency resources for resource multiplexing between the UE 1 (that is, the first terminal device) and other UEs, the time-frequency resources occupied by the DMRS 1 and the DMRS 2 are used for the DMRS transmission and/or reception by the UE 1, and are not used for the DMRS transmission and/or reception by the other UEs; the time-frequency resources occupied by the DMRSs of the other UEs (that is, the first DMRS resource and the second DMRS resource) are used for the DMRS transmission and/or reception by the other UEs, and are not used for the DMRS transmission and/or reception by the UE 1.

Based on the operation S520, the network device may perform the DMRS transmission and/or reception with the first terminal device by the following two implementations.

In one possible implementation, the network device may perform the DMRS transmission and/or reception with the first terminal device on time-frequency resources other than the first DMRS resource and the second DMRS resource, among the time-frequency resources used by the first terminal device for data transmission and/or reception.

Exemplarily, as shown in FIGS. 6A and 6B, when the time-frequency resources occupied by the DMRS of the UE 1 (that is, the first terminal device) are time-frequency resources other than the first DMRS resource and the second DMRS resource, the UE 1 may transmit and/or receive the DMRS with the network device on the time-frequency resources occupied by the DMRS of the UE 1.

Exemplarily, as shown in FIGS. 7A and 7B, when the first DMRS configuration indicates a time-frequency resource occupied by the DMRS of the UE 2 (that is, the first DMRS resource) and the second DMRS configuration indicates a time-frequency resource occupied by the DMRS of the UE 3 (that is, the second DMRS resource), the UE 1 may transmit and/or receive the DMRS with the network device on the time-frequency resource occupied by the DMRS of the UE 1 (that is, a time-frequency resource other than the first DMRS resource and the second DMRS resource).

According to the method, the network device may perform the DMRS transmission and/or reception with the first terminal device on the time-frequency resources other than the first DMRS resource and the second DMRS resource, among the time-frequency resources used by the first terminal device for data transmission and/or reception, so that no dedicated signaling is required to indicate the time-frequency resources used for the DMRS transmission and/or reception by the first terminal device, and signaling overhead is saved.

In another possible implementation, the network device may transmit a third DMRS configuration to the first terminal device. The third DMRS configuration indicates a third DMRS resource that is used for DMRS transmission and/or reception and is used for data transmission and/or reception. Alternatively, the third DMRS configuration indicates the third DMRS resource and a fourth DMRS resource that is used for the DMRS transmission and/or reception but is not used for the data transmission and/or reception. The third DMRS resource may be used for transmission and/or reception of the DMRS and the data by the first terminal device in a superimposed manner.

It should be noted that the DMRS and the data are transmitted and/or received by the first terminal device in a superimposed manner, which means that the DMRS and the data may occupy the same third DMRS resource for the first terminal device, and may be transmitted and/or received at a certain power ratio. That is, for the first terminal device, the DMRS and the data may be transmitted and/or received on the third DMRS resource at a certain power ratio.

Accordingly, the first terminal device may receive the third DMRS configuration transmitted by the network device.

Further, the first terminal device may perform the DMRS transmission and/or reception with the network device on the third DMRS resource. Alternatively, the first terminal device may perform the DMRS transmission and/or reception with the network device on the third DMRS resource and the fourth DMRS resource.

In some embodiments, the third DMRS resource occupies all subcarriers on a portion of OFDM symbols used for data transmission and/or reception; alternatively, the third DMRS resource occupies a portion of subcarriers on all OFDM symbols used for data transmission and/or reception.

Exemplarily, as shown in FIG. 6A, the third DMRS resource includes the subcarriers 6-11 on the OFDM symbols 4-13, and the first terminal device performs both the DMRS transmission and/or reception and the data transmission and/or reception on the third DMRS resource. The fourth DMRS resource includes even-numbered subcarriers on the OFDM symbol 3, and the first terminal device may perform the DMRS transmission and/or reception but not perform the data transmission and/or reception on the fourth DMRS resource. Here, the first terminal device may perform the data transmission and/or reception on the second DMRS resource and the third DMRS resource (i.e., the OFDM symbols 4-13 and the subcarriers 0-11).

Exemplarily, as shown in FIG. 6B, the third DMRS resource includes all subcarriers on the OFDM symbols 4-8, and the first terminal device performs both the DMRS transmission and/or reception and the data transmission and/or reception on the third DMRS resource. The fourth DMRS resource includes even-numbered subcarriers on the OFDM symbol 3, and the first terminal device may perform the DMRS transmission and/or reception but not perform the data transmission and/or reception on the fourth DMRS resource. Here, the first terminal device may perform the data transmission and/or reception on the second DMRS resource and the third DMRS resource (i.e., the OFDM symbols 4-13 and the subcarriers 0-11).

In some embodiments, the fourth DMRS resource occupies a portion of subcarriers on one or two OFDM symbols.

Exemplarily, the fourth DMRS resource may occupy odd-numbered or even-numbered subcarriers on one or two OFDM symbols. For example, as shown in FIGS. 6A and 6B, the fourth DMRS resource may occupy the even-numbered subcarriers on the OFDM symbol 3. For another example, as shown in FIGS. 7A and 7B, the fourth DMRS resource may occupy the even-numbered subcarriers on the OFDM symbol 3.

In some embodiments, when the third DMRS configuration indicates both the third DMRS resource and the fourth DMRS resource, the third DMRS configuration indicates the third DMRS resource and the fourth DMRS resource through different DMRS ports.

It should be noted that, since the third DMRS resource adopts a similar DMRS resource occupation manner as that of the second DMRS resource, the third DMRS resource and the second DMRS resource may adopt the same DMRS type but different DMRS ports. Similarly, since the fourth DMRS resource adopts a similar resource occupation manner as that of the first DMRS resource, the fourth DMRS resource and the first DMRS resource may also adopt different DMRS ports. Based on this, the network device may indicate the third DMRS resource and the fourth DMRS resource through different DMRS ports.

According to the method, the network device may indicate the third DMRS resource for the first terminal device to perform the DMRS transmission and/or reception, or indicate the third DMRS resource and the fourth DMRS resource for the first terminal device to perform the DMRS transmission and/or reception. These resources are orthogonal to the first DMRS resource and the second DMRS resource, thereby avoiding mutual interference between the DMRS transmission and/or reception of the first terminal device and the DMRS transmission and/or reception of other terminal devices (such as the second terminal device and the third terminal device), ensuring the detection performance of the first terminal device and improving the uplink and downlink transmission performance.

The embodiment of the disclosure provides a communication method, in which the first terminal device receives the first DMRS configuration and the second DMRS configuration. The first DMRS configuration indicates a first DMRS resource that is not used for DMRS transmission and/or reception and is not used for data transmission and/or reception, and the second DMRS configuration indicates a second DMRS resource that is used for data transmission and/or reception but is not used for DMRS transmission and/or reception. The DMRS transmission and/or reception and/or the data transmission and/or reception are performed based on the first DMRS configuration and the second DMRS configuration. As such, after the first terminal device receives the first DMRS configuration and the second DMRS configuration, based on the first DMRS configuration and the second DMRS configuration, it is possible to avoid mutual interference between respective DMRSs transmitted and/or received in superposition with data, and/or between the DMRS transmitted and/or received in superposition with data and a DMRS transmitted and/or received separately, thereby ensuring the detection performance of the first terminal device and improving uplink and downlink transmission performance.

The communication method provided by the embodiment of the disclosure will be described in detail below with reference to specific application scenarios.

Embodiments of the disclosure may be divided into the following two implementations based on two implementations for transmitting and/or receiving a DMRS between a network device and a first terminal device.

In a first implementation, the network device indicates the time-frequency resources used for DMRS transmission and/or reception of the first terminal device through signaling (i.e., the third DMRS configuration).

The network device indicates a first DMRS configuration and a second DMRS configuration to the first terminal device. The first DMRS configuration indicates a first DMRS resource that is not available for DMRS transmission and/or reception and is not available for data transmission and/or reception, and the second DMRS configuration indicates a second DMRS resource that is available for data transmission and/or reception but is not available for DMRS transmission and/or reception.

The terminal device receives the first DMRS configuration and the second DMRS configuration indicated by the network device.

In some embodiments, the first DMRS resource occupies a portion of subcarriers on one or more OFDM symbols.

It should be noted that, the first DMRS resource may be a DMRS resource (port) in the NR protocol, that is, a Type 1 DMRS or Type 2 DMRS in the protocol. The first DMRS resource typically occupies a portion of the subcarriers on the first few OFDM symbols of the PDSCH/PUSCH. For example, as shown in FIGS. 6A and 6B, the first DMRS resource may occupy odd-numbered subcarriers in a single OFDM symbol.

It should also be noted that, the first terminal device does not perform the DMRS transmission and/or reception and does not perform the data transmission and/or reception (for example, performs rate matching on the data) on the first DMRS resource, and the first DMRS resource may be reserved for DMRS transmission and/or reception by multiplexed users (including a legacy user and/or a user with superimposed transmission and/or reception), thereby avoiding interference with the DMRS transmission and/or reception by the multiplexed users. At this time, the technical solution provided by the embodiment of the disclosure can support the multiplexing of the first terminal device and a terminal device that performs the DMRS transmission and/or reception alone.

In some embodiments, when the first terminal device performs data transmission and/or DMRS transmission, the first terminal device may perform transmission power boosting on one or more OFDM symbols. Since the first terminal device does not perform the DMRS transmission and does not perform the data transmission on the subcarrier of the first DMRS resource, the saved power may be used for data transmission and/or DMRS transmission on these OFDM symbols. As shown in FIGS. 6A and 6B, when the first terminal device transmits a DMRS on one half of the subcarriers on an OFDM symbol and the first DMRS resource is configured on the other half of the subcarriers, the power boosting of 3 dB may be obtained when the first terminal device transmits the DMRS on the OFDM symbol.

In some embodiments, the first DMRS resource may be used for interference measurement from another terminal device. Since the first DMRS resource is actually used for another terminal device to perform the DMRS transmission and/or reception, the first terminal device may perform the interference measurement on the first DMRS resource to obtain interference from another terminal device to the first terminal device, which may then be used by the receiver to suppress that interference. Meanwhile, when measuring the interference, the first terminal device may assume that the DMRS transmission and/or reception is performed by the interfering user on the first DMRS resource without data transmission and/or reception.

In some embodiments, the second DMRS resource may occupy all subcarriers on a portion of OFDM symbols used for data transmission and/or reception, or the second DMRS resource may occupy a portion of subcarriers on all OFDM symbols used for data transmission and/or reception.

Exemplarily, as shown in FIG. 6A, the second DMRS resource may occupy half of the subcarriers on all OFDM symbols used for data transmission and/or reception.

Exemplarily, as shown in FIG. 6B, the second DMRS resource may occupy all subcarriers on half of the OFDM symbols used for data transmission and/or reception.

In some embodiments, when the second DMRS resource occupies a portion of subcarriers on all OFDM symbols used for data transmission and/or reception, and the first terminal device performs uplink data transmission and/or reception and/or uplink DMRS transmission and/or reception, the first terminal device may perform transmission power boosting on all of the OFDM symbols used for data transmission and/or reception. For example, as shown in FIG. 6A, the second DMRS resource occupies half of the subcarriers on all OFDM symbols used for data transmission and/or reception, and the DMRSs transmitted and/or received on the other half of the subcarriers may have a power boosting of 3 dB. Considering that the first DMRS resource also occupies half of the subcarriers on an OFDM symbol, and the other half of the subcarriers is also used to transmit and/or receive the DMRSs of the first terminal device, all DMRSs of the first terminal device may obtain a power boosting of 3 dB at this time, thereby improving the performance of uplink channel estimation.

In some embodiments, the first DMRS configuration and the second DMRS configuration may be indicated by different DMRS ports, or by different DMRS types. For example, the first terminal device and the network device may pre-define one set of DMRS ports for the first DMRS configuration, and define another set of DMRS ports for the second DMRS configuration, and the network device may indicate the first DMRS configuration and the second DMRS configuration by indicating the respective DMRS ports. For another example, the first terminal device and the network device may pre-define one DMRS type (e.g., DMRS Type 1 or DMRS Type 2) for the first DMRS configuration, and define another DMRS type (e.g., DMRS Type 3) for the second DMRS configuration, and the network device may indicate the first DMRS configuration and the second DMRS configuration by indicating the respective DMRS types.

In some embodiments, the first terminal device may receive a third DMRS configuration indicated by the network device, and the third DMRS configuration indicates a DMRS resource used by the first terminal device for the DMRS transmission and/or reception.

In some embodiments, the DMRS resource indicated by the third DMRS configuration may include a third DMRS resource, and the third DMRS resource is used for both DMRS transmission and/or reception and data transmission and/or reception.

In some other embodiments, the DMRS resource indicated by the third DMRS configuration may include the third DMRS resource and a fourth DMRS resource, and the fourth DMRS resource is not used for the data transmission and/or reception but is used for the DMRS transmission and/or reception.

In some embodiments, the third DMRS resource may occupy all subcarriers on a portion of OFDM symbols used for data transmission and/or reception, or the third DMRS resource may occupy a portion of subcarriers on all OFDM symbols used for data transmission and/or reception. The fourth DMRS resource occupies a portion of subcarriers on one or two OFDM symbols.

It should be noted that, since the third DMRS resource adopts a similar DMRS resource occupation manner as that of the second DMRS resource, the third DMRS resource and the second DMRS resource may adopt the same DMRS type but different DMRS ports. Similarly, since the fourth DMRS resource adopt a similar DMRS resource occupancy manner as that of the first DMRS resource, the fourth DMRS resource and the first DMRS resource may also adopt different DMRS ports in the DMRS design, that is, the third DMRS resource and the fourth DMRS resource may be indicated by different DMRS ports.

Exemplarily, as shown in FIG. 6A, the third DMRS resource may occupy the subcarriers 6-11 in the OFDM symbols 4-13, and the first terminal device may perform both the DMRS transmission and/or reception and the data transmission and/or reception on the third DMRS resource. The fourth DMRS resource may occupy the even-numbered subcarriers in the OFDM symbol 3, and the first terminal device performs the DMRS transmission and/or reception but does not perform the data transmission and/or reception on the fourth DMRS resource.

Exemplarily, as shown in FIG. 6B, the third DMRS resource may occupy all subcarriers in the OFDM symbols 4-8, and the fourth DMRS resource may occupy the even-numbered subcarriers in the OFDM symbol 3. The first terminal device may perform the data transmission and/or reception on the second DMRS resource and the third DMRS resource, i.e. on the OFDM symbols 4-13.

The network device performs the DMRS transmission and/or reception and/or performs the data transmission and/or reception with the first terminal device based on the first DMRS configuration and the second DMRS configuration.

Exemplarily, the network device may perform the DMRS transmission and/or reception with the second terminal device on the first DMRS resource. At least part of the time-frequency resources used by the second terminal device for the data transmission and/or reception overlap with at least part of the time-frequency resources used by the first terminal device for the data transmission and/or reception.

Exemplarily, the network device may perform the DMRS transmission and/or reception with the third terminal device on the second DMRS resource. At least part of the time-frequency resources used by the third terminal device for the data transmission and/or reception overlap with at least part of the time-frequency resources used by the first terminal device for the data transmission and/or reception.

That is, in the embodiment of the disclosure, both the first DMRS resource and the second DMRS resource are used for the DMRS transmission and/or reception by other terminal devices (such as the second terminal device or the third terminal device), and at least part of the time-frequency resources used by other terminal devices for the data transmission and/or reception overlap with at least part of the time-frequency resources used by the first terminal device for the data transmission and/or reception. For example, other terminal devices may adopt the DMRS configuration as shown in FIG. 8A or the DMRS configuration as shown in FIG. 8B on the time-frequency resources multiplexed by the first terminal device and other terminal devices.

The first terminal device performs the DMRS transmission and/or reception and/or performs the data transmission and/or reception based on the first DMRS configuration and the second DMRS configuration.

In some embodiments, the first terminal device performs neither DMRS transmission and/or reception nor data transmission and/or reception on the first DMRS resource indicated by the first DMRS configuration, i.e., performs rate matching on the data.

In some embodiments, the first terminal device does not perform the DMRS transmission and/or reception but still performs the data transmission and/or reception on the second DMRS resource indicated by the second DMRS configuration.

In a second implementation, the network device does not need to indicate the time-frequency resources used for DMRS transmission and/or reception of the first terminal device through dedicated signaling.

The network device indicates a first DMRS configuration and a second DMRS configuration to the first terminal device. The first DMRS configuration indicates a first DMRS resource that is not available for DMRS transmission and/or reception and is not available for data transmission and/or reception, and the second DMRS configuration indicates a second DMRS resource that is available for the data transmission and/or reception but is not available for the DMRS transmission and/or reception.

The first terminal device receives the first DMRS configuration and the second DMRS configuration indicated by the network device.

In some embodiments, the first DMRS resource may occupy a portion of subcarriers on one or more OFDM symbols.

It should be noted that, the first DMRS resource may be a DMRS resource (port) in the NR protocol, that is, a Type 1 DMRS or Type 2 DMRS in the protocol. The first DMRS resource typically occupies a portion of the subcarriers on the first few OFDM symbols of the PDSCH/PUSCH, and may be multiplexed by the first terminal device and another terminal device employing the DMRS configuration. For example, as shown in the DMRS of UE2 in FIGS. 7A and 7B, the first DMRS resource may occupy odd-numbered subcarriers in a single OFDM symbol.

In some embodiments, the first terminal device does not perform the DMRS transmission and/or reception and does not perform the data transmission and/or reception on the first DMRS resource (e.g., rate matching is performed on the data on the first DMRS resource), and the first DMRS resource may be reserved for the multiplexed user to perform DMRS transmission and/or reception (e.g., the DMRS transmission and/or reception of UE2 in FIGS. 7A and 7B), thereby avoiding interference to the DMRS transmission and/or reception of the multiplexed user.

In some embodiments, the first DMRS resource may be used for interference measurement from another terminal device. For example, as shown in FIGS. 7A and 7B, the first DMRS resource is actually used for the DMRS transmission and/or reception by the UE 2, so interference from the UE 2 may be measured on the first DMRS resource.

In some embodiments, the second DMRS resource may occupy all subcarriers on a portion of OFDM symbols used for data transmission and/or reception, or the second DMRS resource may occupy a portion of subcarriers on all OFDM symbols used for data transmission and/or reception.

Exemplarily, the second DMRS resource may occupy half of the subcarriers on all OFDM symbols used for data transmission and/or reception, and may be used to transmit and/or receive the DMRS of another UE, such as UE3, as shown in the DMRS of UE3 in FIG. 7A.

Exemplarily, the second DMRS resource may occupy all subcarriers on half of the OFDM symbols used for data transmission and/or reception, and may be used to transmit and/or receive the DMRS of another UE, such as the UE3, as shown in the DMRS of UE3 in FIG. 7B.

Exemplarily, as shown in FIG. 7A, the second DMRS resource occupies half of the subcarriers or quarter of the subcarriers on all OFDM symbols used for data transmission, the first DMRS resource occupies a portion of subcarriers on a single OFDM symbol, and the first terminal device (that is, UE 1) may perform power boosting on these OFDM symbols when performing the DMRS transmission and/or performing the data transmission.

In some embodiments, the first terminal device may perform the DMRS transmission and/or reception on a time-frequency resource, other than the DMRS resources indicated by the first DMRS configuration and the second DMRS configuration, in the time-frequency resources used for data transmission and/or reception. For example, as shown in FIGS. 7A and 7B, the OFDM symbols 3-13 are used for data transmission and/or reception by the UE 1 (that is, the first terminal device), the first DMRS configuration indicates the time-frequency resource occupied by the DMRS of the UE 2 (that is, the first DMRS resource), and the second DMRS configuration indicates the time-frequency resource occupied by the DMRS of the UE 3 (that is, the second DMRS resource). For the UE 1, the time-frequency resources on the OFDM symbols 3-13, other than the DMRS resources indicated by the first DMRS configuration and the second DMRS configuration, may be used to transmit and/or receive the DMRS of the UE 1 (these resources may also be used to transmit and/or receive the data of the UE 1). In this manner, there is no need for dedicated signaling to indicate the time-frequency resources used for the DMRS transmission and/or reception by the first terminal device, and thus the signaling overhead is saved.

The network device performs the DMRS transmission and/or reception and the data transmission and/or reception with the first terminal device based on the first DMRS configuration and the second DMRS configuration.

In some embodiments, the network device may perform the DMRS transmission and/or reception with the second terminal device on the first DMRS resource. At least part of the time-frequency resources used by the second terminal device for the data transmission and/or reception overlap with at least part of the time-frequency resources used by the first terminal device for the data transmission and/or reception. For example, the DMRS resource of the second terminal device (i.e., UE2) may be shown in FIGS. 7A and 7B.

In some embodiments, the network device may perform the DMRS transmission and/or reception with the third terminal device on the second DMRS resource. At least part of the time-frequency resources used by the third terminal device for the data transmission and/or reception overlap with at least part of the time-frequency resources used by the first terminal device for the data transmission and/or reception. For example, the DMRS resource of the third terminal device (i.e., UE3) may be shown in FIGS. 7A and 7B.

That is, in the embodiment of the disclosure, the first DMRS resource and the second DMRS resource may be used for the DMRS transmission and/or reception by the second terminal device and the third terminal device, respectively. At least part of the time-frequency resources used by the second terminal device for the data transmission and/or reception overlap with at least part of the time-frequency resources used by the first terminal device for the data transmission and/or reception, and at least part of the time-frequency resources used by the third terminal device for the data transmission and/or reception overlap with at least part of the time-frequency resources used by the first terminal device for the data transmission and/or reception. For example, the first terminal device (i.e., UE1), the second terminal device (i.e., UE2) and the third terminal device (i.e., UE3) may adopt the DMRS configuration as shown in FIGS. 7A and 7B on the time-frequency resources multiplexed by the three terminal devices.

The first terminal device performs the DMRS transmission and/or reception and the data transmission and/or reception based on the first DMRS configuration and the second DMRS configuration.

In some embodiments, the first terminal device performs neither the DMRS transmission and/or reception nor the data transmission and/or reception (i.e., performs the rate matching on the data) on the first DMRS resource indicated by the first DMRS configuration.

In some embodiments, the first terminal device does not perform the DMRS transmission and/or reception, but still performs the data transmission and/or reception on the second DMRS resource indicated by the second DMRS configuration.

The embodiment of the disclosure provides a communication method that can avoid mutual interference between respective DMRSs transmitted and/or received in superposition with data, or between the DMRS transmitted and/or received in superposition with data and a DMRS transmitted and/or received separately, and supports the MU-MIMO multiplexing transmission and/or reception between a user whose DMRS and data are transmitted and/or received in a superimposed manner and a legacy user or another user with superimposed transmission and/or reception, thereby improving uplink and downlink transmission performance.

The preferred embodiments of the disclosure have been described in detail above with reference to the accompanying drawings, but the disclosure is not limited to the specific details in the above embodiments. A variety of simple modifications may be made to the technical solution in the disclosure within the scope of the technical concept of the disclosure, and these simple modifications all belong to the scope of protection of the disclosure. For example, the various specific technical features described in the above detailed description can be combined in any suitable manner unless there is a contradiction, and various possible combinations will not be further described in the disclosure in order to avoid unnecessary repetition. For another example, any combination of various embodiments of the disclosure may be possible, and as long as it does not depart from the idea of the disclosure, the combination should also be regarded as the disclosed content in the disclosure. For another example, on the premise that there is no conflict, the various embodiments and/or the technical features in each of the embodiments described in the disclosure can be arbitrarily combined with the prior art, and the technical solution obtained after the combination should also fall within the scope of protection of the disclosure.

It should also be appreciated that in the various method embodiments of the disclosure, the sequence numbers of the above-described processes does not imply the execution order, and the execution order of each process should be determined by its function and internal logic, and should not constitute any limitation on the implementation process of the embodiments of the disclosure.

FIG. 9 is a schematic diagram of a structure composition of a terminal apparatus 900 provided by an embodiment of the disclosure. As shown in FIG. 9, the terminal apparatus 900 includes a first communication unit 910.

The first communication unit 910 is configured to receive a first DMRS configuration and a second DMRS configuration. The first DMRS configuration indicates a first DMRS resource that is not used for DMRS transmission and/or reception and is not used for data transmission and/or reception, and the second DMRS configuration indicates a second DMRS resource that is used for data transmission and/or reception but is not used for DMRS transmission and/or reception.

The first communication unit 910 is further configured to perform the DMRS transmission and/or reception and/or perform the data transmission and/or reception based on the first DMRS configuration and the second DMRS configuration.

In some embodiments, the first DMRS resource occupies a portion of subcarriers on one or more OFDM symbols.

In some embodiments, as shown in FIG. 9, the terminal apparatus 900 may further include a processing unit 920.

The processing unit 920 is configured to perform power boosting for the DMRS transmission and/or perform power boosting for the data transmission on one or more OFDM symbols.

In some embodiments, the first DMRS resource is used for interference measurement from a terminal device other than the first terminal device.

In some embodiments, the second DMRS resource occupies all subcarriers on a portion of OFDM symbols used for data transmission and/or reception, or the second DMRS resource occupies a portion of subcarriers on all OFDM symbols used for data transmission and/or reception.

In some embodiments, the processing unit 920 is further configured to perform power boosting for the DMRS transmission and/or perform power boosting for the data transmission on all the OFDM symbols used for data transmission.

In some embodiments, the first DMRS configuration and the second DMRS configuration indicate the first DMRS resource and the second DMRS resource through different DMRS ports, respectively, and/or indicate the first DMRS resource and the second DMRS resource through different DMRS types, respectively.

In some embodiments, the first communication unit 910 is further configured to perform the DMRS transmission and/or reception on time-frequency resources, other than the first DMRS resource and the second DMRS resource, among time-frequency resources used for the data transmission and/or reception by the first terminal device.

In some embodiments, the first communication unit 910 is further configured to receive a third DMRS configuration. The third DMRS configuration indicates a third DMRS resource that is used for DMRS transmission and/or reception and is used for data transmission and/or reception, or the third DMRS configuration indicates the third DMRS resource and a fourth DMRS resource that is used for the DMRS transmission and/or reception but is not used for the data transmission and/or reception.

In some embodiments, the third DMRS resource occupies all subcarriers on a portion of OFDM symbols used for data transmission and/or reception, or the third DMRS resource occupies a portion of subcarriers on all OFDM symbols used for data transmission and/or reception.

In some embodiments, the fourth DMRS resource occupies a portion of subcarriers on one or two OFDM symbols.

In some embodiments, when the third DMRS configuration indicates both the third DMRS resource and the fourth DMRS resource, the third DMRS configuration indicates the third DMRS resource and the fourth DMRS resource through different DMRS ports.

The embodiment of the disclosure provides a terminal apparatus that receives the first DMRS configuration and the second DMRS configuration. The first DMRS configuration indicates a first DMRS resource that is not used for DMRS transmission and/or reception and is not used for data transmission and/or reception, and the second DMRS configuration indicates a second DMRS resource that is used for data transmission and/or reception but is not used for DMRS transmission and/or reception. DMRS transmission and/or reception and/or data transmission and/or reception are performed based on the first DMRS configuration and the second DMRS configuration. As such, after the terminal apparatus receives the first DMRS configuration and the second DMRS configuration, based on the first DMRS configuration and the second DMRS configuration, it is possible to avoid mutual interference between respective DMRSs transmitted and/or received in superposition with data, and/or between the DMRS transmitted and/or received in superposition with data and a DMRS transmitted and/or received separately, thereby ensuring detection performance of the first terminal device and improving uplink and downlink transmission performance.

Those skilled in the art will appreciate that the related description of the above-described terminal apparatus according to the embodiment of the disclosure may be understood with reference to the related description of the communication method according to the embodiment of the disclosure.

FIG. 10 is a schematic diagram of a structure composition of a network apparatus 1000 provided by an embodiment of the disclosure. As shown in FIG. 10, the network apparatus 1000 includes a second communication unit 1010.

The second communication unit 1010 is configured to transmit a first DMRS configuration and a second DMRS configuration to a first terminal device. The first DMRS configuration indicates a first DMRS resource that is not used for DMRS transmission and/or reception and is not used for data transmission and/or reception, and the second DMRS configuration indicates a second DMRS resource that is used for data transmission and/or reception but is not used for DMRS transmission and/or reception.

The second communication unit 1010 is further configured to perform DMRS transmission and/or reception and/or perform data transmission and/or reception with the first terminal device based on the first DMRS configuration and the second DMRS configuration.

In some embodiments, the first DMRS resource occupies a portion of subcarriers on one or more OFDM symbols.

In some embodiments, the second communication unit 1010 is further configured to perform DMRS transmission and/or reception with a second terminal device on the first DMRS resource. At least part of time-frequency resources used by the second terminal device for data transmission and/or reception overlap with at least part of time-frequency resources used by the first terminal device for data transmission and/or reception.

In some embodiments, the second DMRS resource occupies all subcarriers on a portion of OFDM symbols used for data transmission and/or reception, or the second DMRS resource occupies a portion of subcarriers on all OFDM symbols used for data transmission and/or reception.

In some embodiments, the second communication unit 1010 is further configured to perform DMRS transmission and/or reception with a third terminal device on the second DMRS resource. At least part of time-frequency resources used by the third terminal device for data transmission and/or reception overlap with at least part of time-frequency resources used by the first terminal device for data transmission and/or reception.

In some embodiments, the first DMRS configuration and the second DMRS configuration indicate the first DMRS resource and the second DMRS resource through different DMRS ports, respectively, and/or indicate the first DMRS resource and the second DMRS resource through different DMRS types, respectively.

In some embodiments, the second communication unit 1010 is further configured to perform the DMRS transmission and/or reception with the first terminal device on time-frequency resources, other than the first DMRS resource and the second DMRS resource, among time-frequency resources used for data transmission and/or reception by the first terminal device.

In some embodiments, the second communication unit 1010 is further configured to transmit a third DMRS configuration to the first terminal device. The third DMRS configuration indicates a third DMRS resource that is used for DMRS transmission and/or reception and is used for data transmission and/or reception, or the third DMRS configuration indicates the third DMRS resource and a fourth DMRS resource that is used for DMRS transmission and/or reception but is not used for data transmission and/or reception.

In some embodiments, the third DMRS resource occupies all subcarriers on a portion of OFDM symbols used for data transmission and/or reception, or the third DMRS resource occupies a portion of subcarriers on all OFDM symbols used for data transmission and/or reception.

In some embodiments, the fourth DMRS resource occupies a portion of subcarriers on one or two OFDM symbols.

In some embodiments, when the third DMRS configuration indicates both the third DMRS resource and the fourth DMRS resource, the third DMRS configuration indicates the third DMRS resource and the fourth DMRS resource through different DMRS ports.

The embodiment of the disclosure provides a network apparatus that transmits a first DMRS configuration and a second DMRS configuration to a first terminal device. The first DMRS configuration indicates a first DMRS resource that is not used for DMRS transmission and/or reception and is not used for data transmission and/or reception, and the second DMRS configuration indicates a second DMRS resource that is used for data transmission and/or reception but is not used for DMRS transmission and/or reception. The network apparatus performs DMRS transmission and/or reception and/or performs data transmission and/or reception with the first terminal device based on the first DMRS configuration and the second DMRS configuration. As such, the network apparatus transmits the first DMRS configuration and the second DMRS configuration to the first terminal device, such that the first terminal device uses the first DMRS configuration and the second DMRS configuration to avoid mutual interference between respective DMRSs transmitted and/or received in superposition with data, and/or between the DMRS transmitted and/or received in superposition with data and a DMRS transmitted and/or received separately, thereby ensuring detection performance of the first terminal device and improving uplink and downlink transmission performance.

Those skilled in the art will appreciate that the related description of the above-described network apparatus according to the embodiment of the disclosure may be understood with reference to the related description of the communication method according to the embodiment of the disclosure.

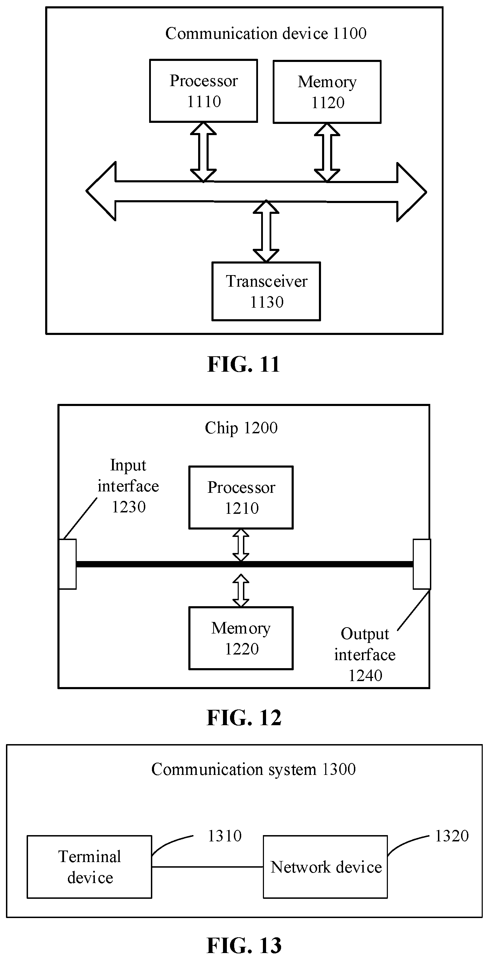

FIG. 11 is a schematic diagram of a structure composition of a communication device provided by an embodiment of the disclosure. The communication device 1100 may be a terminal device or a network device. The communication device 1100 shown in FIG. 11 may include a processor 1110, a memory 1120, and a transceiver 1130.

The memory 1120 is configured to store a computer program.

The processor 1110 is connected to the memory 1120 and is configured to call the computer program from the memory and execute the computer program to implement the methods in the embodiments of the disclosure.

The transceiver 1130 is also referred to as a communication interface, and is configured to receive and transmit information in a process of transmitting and receiving information with other external devices.

In some embodiments, the memory 1120 may be a separate device independent of the processor 1110 or may be integrated into the processor 1110.

In some embodiments, the transceiver 1130 may include an input interface. Herein, the processor 1110 may control the input interface to communicate with other external devices, specifically, may receive information or data transmitted by other external devices.

In some embodiments, the transceiver 1130 may include an output interface. Herein, the processor 1110 may control the output interface to communicate with other external devices, specifically, may transmit information or data to other external devices.

In some embodiments, the transceiver 1130 may include a transmitter and a receiver. The transceiver 1130 may further include an antenna, and the number of antennas may be one or more.

In some embodiments, the communication device 1100 may be applied to the network device in the embodiments of the disclosure, and the communication device 1100 is capable of implementing the corresponding processes implemented by the network device in various methods in the embodiments of the disclosure, which will not be described again here for simplicity.

In some embodiments, the communication device 1100 may be applied to the first terminal device in the embodiments of the disclosure, and the communication device 1100 is capable of implementing the corresponding processes implemented by the first terminal device in various methods in the embodiments of the disclosure, which will not be described again here for simplicity.

FIG. 12 is a schematic structural diagram of a chip provided by an embodiment of the disclosure. The chip 1200 shown in FIG. 12 includes a processor 1210 that calls a computer program from a memory and executes the computer program to implement the methods in the embodiments of the disclosure.

In some embodiments, as shown in FIG. 12, the chip 1200 may further include a memory 1220. Herein, the processor 1210 calls the computer program from the memory 1220 and executes the computer program to implement the methods in the embodiments of the disclosure.

The memory 1220 may be a separate device independent of the processor 1210, or may be integrated into the processor 1210.

In some embodiments, the chip 1200 may further include an input interface 1230. Herein, the processor 1210 may control the input interface 1230 to communicate with other devices or chips, and specifically, may acquire information or data transmitted by other devices or chips.

In some embodiments, the chip 1200 may further include an output interface 1240. The processor 1210 may control the output interface 1240 to communicate with other devices or chips, and specifically, may output information or data to other devices or chips.

In some embodiments, the chip may be applied to the first terminal device in the embodiments of the disclosure, and the chip is capable of implementing the corresponding processes implemented by the first terminal device in various methods in the embodiments of the disclosure, which will not be described again here for simplicity.

In some embodiments, the chip may be applied to the network device in the embodiments of the disclosure, and the chip is capable of implementing the corresponding processes implemented by the network device in various methods in the embodiments of the disclosure, which will not be described again here for simplicity.

It will be appreciated that the chip mentioned in the embodiment of the disclosure may also be referred to as a system-level chip, a system chip, a chip system, a system-on-chip, or the like.

FIG. 13 is a schematic block diagram of a communication system provided by an embodiment of the disclosure. As shown in FIG. 13, the communication system 1300 includes a terminal device 1310 and a network device 1320.

The terminal device 1310 may be the first terminal device in the embodiment of the disclosure, the terminal device 1310 is configured to implement the corresponding functions implemented by the first terminal device in the above methods, and the network device 1320 is configured to implement the corresponding functions implemented by the network device in the above methods, which will not be described again here for simplicity.

It will be appreciated that the processor in the embodiments of the disclosure may be an integrated circuit chip having a signal processing capability. During implementation, the operations in the foregoing method embodiments may be implemented by an integrated logic circuit in hardware form in the processor or implemented by instructions in software form. The foregoing processor may be a general-purpose processor, a digital signal processor (DSP), an application-specific integrated circuit (ASIC), a field programmable gate array (FPGA), or another programmable logical device, a discrete gate or transistor logical device, or a discrete hardware component. The processor may be configured to implement or perform the methods, operations and logical blocks disclosed in the embodiments of the disclosure. The general-purpose processor may be a microprocessor or the processor may be any conventional processor and the like. The operations of the methods disclosed with reference to the embodiments of the disclosure may be directly executed and completed by means of a hardware decoding processor, or may be executed and completed by using a combination of hardware in the decoding processor and a software module. The software module may be located in a mature storage medium in the field, such as a random access memory (RAM), a flash memory, a read-only memory (ROM), a programmable ROM (PROM), an electrically erasable programmable memory, or a register. The storage medium is located in the memory, and the processor reads information in the memory and completes the operations in the foregoing methods in combination with the hardware of the processor.

It can be understood that, the memory in the embodiments of the disclosure may be a volatile memory or a non-volatile memory, or may include both a volatile memory and a non-volatile memory. The non-volatile memory may be an ROM, a PROM, an erasable PROM (EPROM), an electrically EPROM (EEPROM) or a flash memory. The volatile memory may be an RAM and is used as an external cache. By way of illustration, but not limitation, many forms of RAMs may be available, for example, a static RAM (SRAM), a dynamic RAM (DRAM), a synchronous DRAM (SDRAM), a double data rate SDRAM (DDR SDRAM), an enhanced SDRAM (ESDRAM), a synch link DRAM (SLDRAM) and a direct rambus RAM (DR RAM). It should be noted that, the memory in the system and method described herein is intended to include, but is not limited to, these memories and any other suitable types of memories.

It will be appreciated that the foregoing memory is described for illustrative purposes only and is not intended to be limiting, for example, the memory in the embodiments of the disclosure may be an SRAM, a DRAM, an SDRAM, a DDR SDRAM, an ESDRAM, an SLDRAM or a DR RAM, etc. That is, the memory in the embodiments of the disclosure is intended to include, but is not limited to, these memories and any other suitable types of memories.

An embodiment of the disclosure further provides a computer-readable storage medium storing a computer program that, when executed by at least one processor, causes the at least one processor to implement the methods in the embodiments of the disclosure.

In some embodiments, the computer-readable storage medium may be applied to the network device in the embodiments of the disclosure, and the computer program causes the computer to execute the corresponding processes implemented by the network device in various methods in the embodiments of the disclosure, which will not be described again here for simplicity.

In some embodiments, the computer-readable storage medium may be applied to the first terminal device in the embodiment of the disclosure, and the computer program causes the computer to execute the corresponding processes implemented by the first terminal device in various methods in the embodiments of the disclosure, which will not be described again here for simplicity.

An embodiment of the disclosure further provides a computer program product including a computer storage medium. The computer storage medium stores a computer program including instructions executable by at least one processor, and the methods in the embodiments of the disclosure are implemented when the instructions are executed by the at least one processor.

In some embodiments, the computer program product may be applied to the network device in the embodiments of the disclosure, and the computer program instructions cause the computer to execute the corresponding processes implemented by the network device in various methods in the embodiments of the disclosure, which will not be described again here for simplicity.

In some embodiments, the computer program product may be applied to the first terminal device in the embodiments of the disclosure, and the computer program instructions cause the computer to execute the corresponding processes implemented by the first terminal device in various methods in the embodiments of the disclosure, which will not be described again here for simplicity.

An embodiment of the disclosure further provides a computer program that causes a computer to perform the methods in the embodiments of the disclosure.

In some embodiments, the computer program may be applied to the network device in the embodiments of the disclosure, and when the computer program is run on the computer, the computer is caused to execute the corresponding processes implemented by the network device in various methods in the embodiments of the disclosure, which will not be described again here for simplicity.

In some embodiments, the computer program may be applied to the first terminal device in the embodiments of the disclosure, and when the computer program is run on the computer, the computer is caused to execute the corresponding processes implemented by the first terminal device in various methods in the embodiments of the disclosure, which will not be described again here for simplicity.

A person of ordinary skill in the art may be aware that, units and algorithm steps of various examples described in combination with the embodiments disclosed herein may be implemented by electronic hardware, or a combination of computer software and the electronic hardware. Whether the functions are performed by hardware or software depends on particular applications and design constraint conditions of the technical solutions. Those skilled in the art may use different methods to implement the described functions for each particular application, and such implementations should not be considered to go beyond the scope of the disclosure.

It may be clearly understood by those skilled in the art that, for the purpose of convenient and brief description, the detailed working processes of the foregoing system, apparatuses, and units may refer to the corresponding processes in the foregoing method embodiments, and details are not elaborated herein again.

In the several embodiments provided in this disclosure, it should be understood that the disclosed system, apparatus, and method may be implemented in other manners. For example, the described apparatus embodiments are merely exemplary. For example, the unit division is merely a logical function division and there may be other divisions in actual implementations. For example, multiple units or components may be combined or integrated into another system, or some features may be ignored or not performed. In addition, the displayed or discussed mutual coupling or direct coupling or communication connections may be an indirect coupling or communication connection implemented through some interfaces, apparatuses or units, and may be implemented in electrical, mechanical or other forms.

The units described as separate parts may be or may not be physically separated, and parts displayed as units may be or may not be physical units, that is, they may be located in one place, or may be distributed on multiple network units. Some or all of the units may be selected according to actual needs to achieve the objectives of the solutions in the embodiments.

In addition, functional units in the embodiments of this disclosure may be integrated into one processing unit, or each of the units may exist physically and separately, or two or more units are integrated into one unit.

When the functions are implemented in form of software functional modules and sold or used as an independent product, the functions may be stored in a computer-readable storage medium. Based on such an understanding, the technical solutions of the disclosure essentially, or the part contributing to the prior art, or part of the technical solutions may be embodied in the form of a software product. The computer software product is stored in a storage medium, and includes several instructions for instructing a computer device (which may be a personal computer, a server, a network device, and the like) to perform all or part of the operations in each method described in the embodiment of the disclosure. The foregoing storage medium includes: any medium that can store program codes, such as a USB flash disk, a removable hard disk, an ROM, an RAM, a magnetic disk, or an optical disk.

The foregoing descriptions are merely specific implementations of the disclosure, but the scope of protection of the disclosure is not limited thereto. Any variation or replacement readily figured out by a person skilled in the art within the technical scope disclosed in the disclosure shall fall within the scope of protection of the disclosure. Therefore, the scope of protection of the disclosure shall be subject to the scope of protection of the claims.

## Claims

1. A communication method, applied to a first terminal device, the communication method comprising:
receiving a first demodulation reference signal (DMRS) configuration and a second DMRS configuration, wherein the first DMRS configuration indicates a first DMRS resource that is not used for DMRS transmission and/or reception and is not used for data transmission and/or reception, and the second DMRS configuration indicates a second DMRS resource that is used for data transmission and/or reception but is not used for DMRS transmission and/or reception; and
performing DMRS transmission and/or reception and/or performing data transmission and/or reception based on the first DMRS configuration and the second DMRS configuration.

2. The method of claim 1, wherein the first DMRS resource occupies a portion of subcarriers on one or more orthogonal frequency division multiplexing (OFDM) symbols.

3. The method of claim 2, further comprising:
performing power boosting for the DMRS transmission and/or performing power boosting for the data transmission on the one or more OFDM symbols.

4. The method of any one of claims 1 to 3, wherein the first DMRS resource is used for interference measurement from a terminal device other than the first terminal device.

5. The method of any one of claims 1 to 4, wherein the second DMRS resource occupies all subcarriers on a portion of OFDM symbols used for data transmission and/or reception, or the second DMRS resource occupies a portion of subcarriers on all OFDM symbols used for data transmission and/or reception.

6. The method of claim 5, further comprising:
performing power boosting for the DMRS transmission and/or performing power boosting for the data transmission on all the OFDM symbols used for data transmission.

7. The method of any one of claims 1 to 6, wherein the first DMRS configuration and the second DMRS configuration indicate the first DMRS resource and the second DMRS resource through different DMRS ports, respectively, and/or indicate the first DMRS resource and the second DMRS resource through different DMRS types, respectively.

8. The method of any one of claims 1 to 7, further comprising:
performing the DMRS transmission and/or reception on time-frequency resources, other than the first DMRS resource and the second DMRS resource, among time-frequency resources used for data transmission and/or reception by the first terminal device.

9. The method of any one of claims 1 to 7, further comprising:
receiving a third DMRS configuration, wherein the third DMRS configuration indicates a third DMRS resource that is used for DMRS transmission and/or reception and is used for data transmission and/or reception, or the third DMRS configuration indicates the third DMRS resource and a fourth DMRS resource that is used for the DMRS transmission and/or reception but is not used for the data transmission and/or reception.

10. The method of claim 9, wherein the third DMRS resource occupies all subcarriers on a portion of OFDM symbols used for data transmission and/or reception, or the third DMRS resource occupies a portion of subcarriers on all OFDM symbols used for data transmission and/or reception.

11. The method of claim 9 or 10, wherein the fourth DMRS resource occupies a portion of subcarrier on one or two OFDM symbols.

12. The method of any one of claims 9 to 11, wherein when the third DMRS configuration indicates both the third DMRS resource and the fourth DMRS resource, the third DMRS configuration indicates the third DMRS resource and the fourth DMRS resource through different DMRS ports.

13. A communication method, comprising:
transmitting a first demodulation reference signal (DMRS) configuration and a second DMRS configuration to a first terminal device, wherein the first DMRS configuration indicates a first DMRS resource that is not used for DMRS transmission and/or reception and is not used for data transmission and/or reception, and the second DMRS configuration indicates a second DMRS resource that is used for data transmission and/or reception but is not used for DMRS transmission and/or reception; and
performing DMRS transmission and/or reception and/or performing data transmission and/or reception with the first terminal device based on the first DMRS configuration and the second DMRS configuration.

14. The method of claim 13, wherein the first DMRS resource occupies a portion of subcarriers on one or more orthogonal frequency division multiplexing (OFDM) symbols.

15. The method of claim 13 or 14, further comprising:
performing DMRS transmission and/or reception with a second terminal device on the first DMRS resource, wherein at least part of time-frequency resources used by the second terminal device for data transmission and/or reception overlap with at least part of time-frequency resources used by the first terminal device for data transmission and/or reception.

16. The method of any one of claims 13 to 15, wherein the second DMRS resource occupies all subcarriers on a portion of OFDM symbols used for data transmission and/or reception, or the second DMRS resource occupies a portion of subcarriers on all OFDM symbols used for data transmission and/or reception.

17. The method of any one of claims 13 to 16, further comprising:
performing DMRS transmission and/or reception with a third terminal device on the second DMRS resource, wherein at least part of time-frequency resources used by the third terminal device for data transmission and/or reception overlap with at least part of time-frequency resources used by the first terminal device for data transmission and/or reception.

18. The method of any one of claims 13 to 17, wherein the first DMRS configuration and the second DMRS configuration indicate the first DMRS resource and the second DMRS resource through different DMRS ports, respectively, and/or indicate the first DMRS resource and the second DMRS resource through different DMRS types, respectively.

19. The method of any one of claims 13 to 18, further comprising:
performing the DMRS transmission and/or reception with the first terminal device on time-frequency resources, other than the first DMRS resource and the second DMRS resource, among time-frequency resources used for data transmission and/or reception by the first terminal device.

20. The method of any one of claims 13 to 18, further comprising:
transmitting a third DMRS configuration to the first terminal device, wherein the third DMRS configuration indicates a third DMRS resource that is used for DMRS transmission and/or reception and is used for data transmission and/or reception, or the third DMRS configuration indicates the third DMRS resource and a fourth DMRS resource that is used for DMRS transmission and/or reception but is not used for data transmission and/or reception.

21. The method of claim 20, wherein the third DMRS resource occupies all subcarriers on a portion of OFDM symbols used for data transmission and/or reception, or the third DMRS resource occupies a portion of subcarriers on all OFDM symbols used for data transmission and/or reception.

22. The method of claim 20 or 21, wherein the fourth DMRS resource occupies a portion of subcarrier on one or two OFDM symbols.

23. The method of any one of claims 20 to 22, wherein when the third DMRS configuration indicates both the third DMRS resource and the fourth DMRS resource, the third DMRS configuration indicates the third DMRS resource and the fourth DMRS resource through different DMRS ports.

24. A terminal apparatus, comprising a first communication unit, wherein
the first communication unit is configured to receive a first demodulation reference signal (DMRS) configuration and a second DMRS configuration, wherein the first DMRS configuration indicates a first DMRS resource that is not used for DMRS transmission and/or reception and is not used for data transmission and/or reception, and the second DMRS configuration indicates a second DMRS resource that is used for data transmission and/or reception but is not used for DMRS transmission and/or reception; and
the first communication unit is further configured to perform DMRS transmission and/or reception and/or perform data transmission and/or reception based on the first DMRS configuration and the second DMRS configuration.

25. A network apparatus, comprising a second communication unit, wherein
the second communication unit is configured to transmit a first demodulation reference signal (DMRS) configuration and a second DMRS configuration to a first terminal device, wherein the first DMRS configuration indicates a first DMRS resource that is not used for DMRS transmission and/or reception and is not used for data transmission and/or reception, and the second DMRS configuration indicates a second DMRS resource that is used for data transmission and/or reception but is not used for DMRS transmission and/or reception; and
the second communication unit is further configured to perform DMRS transmission and/or reception and/or perform data transmission and/or reception with the first terminal device based on the first DMRS configuration and the second DMRS configuration.

26. A terminal device, comprising:
a memory configured to store a computer program;
a processor connected to the memory and configured to call the computer program from the memory and execute the computer program to implement the method of any one of claims 1 to 12; and
a transceiver configured to receive and transmit information in a process of transmitting and receiving information with other external devices.

27. A network device, comprising:
a memory configured to store a computer program;
a processor connected to the memory and configured to call the computer program from the memory and execute the computer program to implement the method of any one of claims 13 to 23; and
a transceiver configured to receive and transmit information in a process of transmitting and receiving information with other external devices.

28. A chip, comprising:
a memory configured to store a computer program;
a processor connected to the memory and configured to call the computer program from the memory and execute the computer program, to enable a device mounted with the chip to perform the method of any one of claims 1 to 12 or to perform the method of any one of claims 13 to 23; and
a transceiver configured to receive and transmit information in a process of transmitting and receiving information with another device or chip.

29. A computer-readable storage medium storing a computer program that, when executed by at least one processor, causes the at least one processor to implement the method of any one of claims 1 to 12 or to implement the method of any one of claims 13 to 23.

30. A computer program product, comprising a computer storage medium storing a computer program, the computer program comprising instructions executable by at least one processor that, when executed by the at least one processor, cause the at least one processor to implement the method of any one of claims 1 to 12 or to implement the method of any one of claims 13 to 23.

31. A computer program, the computer program causing a computer to perform the method of any one of claims 1 to 12 or to perform the method of any one of claims 13 to 23.
